## Europäisches Patentamt
## European Patent Office
## Office européen des brevets

(19)

(11) Veröffentlichungsnummer: **0 602 132 B1**

(12) # EUROPÄISCHE PATENTSCHRIFT

(45) Veröffentlichungstag der Patentschrift: **10.05.95**

(51) Int. Cl.[6]: **B64G 1/38**, G05D 1/08

(21) Anmeldenummer: **92918874.6**

(22) Anmeldetag: **04.09.92**

(86) Internationale Anmeldenummer:
**PCT/EP92/02050**

(87) Internationale Veröffentlichungsnummer:
**WO 93/04924 (18.03.93 93/08)**

(54) **VERFAHREN UND VORRICHTUNG ZUR LAGEREGELUNG EINES DREIACHSENSTABILISIERTEN, DRALLBEHAFTETEN RAUMFAHRZEUGES.**

(30) Priorität: **06.09.91 DE 4129628**

(43) Veröffentlichungstag der Anmeldung:
**22.06.94 Patentblatt 94/25**

(45) Bekanntmachung des Hinweises auf die Patenterteilung:
**10.05.95 Patentblatt 95/19**

(84) Benannte Vertragsstaaten:
**DE FR GB IT**

(56) Entgegenhaltungen:
**EP-A- 0 148 550**
**EP-A- 0 460 935**
**WO-A-89/02622**
**US-A- 3 984 071**

(73) Patentinhaber: **Daimler-Benz Aerospace Aktiengesellschaft**

**D-81663 München (DE)**

(72) Erfinder: **SURAUER, Michael**
**Lindenstrasse 11**
**D-8224 Chieming (DE)**
Erfinder: **BITTNER, Helmut**
**Zirlestrasse 4**
**D-8000 München 70 (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services
(3.10/3.09/3.3.3)

**Beschreibung**

Die Erfindung bezieht sich auf die Verbesserung von Vorrichtungen zur Regelung der Drallrichtung und Dämpfung von Nutationsschwingungen von Raumfahrzeugen, die einen gespeicherten Drall aufweisen. Zur Sollwertregelung und Schwingungsstabilisierung um ihre rotatorischen Achsen frei beweglicher, drallbehafteter Körper bezüglich zweier, quer zur Drallachse liegender Körperachsen (X, Z - Achsen) mittels eines oder mehrerer, die Winkelabweichungen der ersten (X-) und/oder zweiten Querachse (Z-Achse) von ihrer Sollage messenden Lagesensoren und um eine oder beide Querachsen Stellmomente erzeugender, insbesondere diskontinuierlich arbeitender Stellglieder wie Reaktionsdüsen` deren Stelleingriffe vorgegebene Minimalimpulsinkremente nicht unterschreiten können sind verschiedenartige Vorrichtungen bekannt geworden. Eine davon, nämlich die aus der WO 89/02622 bekannte, ist dadurch gekennzeichnet, daß aus den Meßsignalen für die Abweichungen ($\epsilon_\phi$, $\epsilon_\psi$) einer oder beider Querachsen von ihrer Sollwinkellage über Reglernetzwerke getrennte Signalanteile gebildet werden, die für die Bahnbewegung oder Drallrichtung im Raum ($\phi_0$, $\psi_0$) bzw. für die Nutationsbewegung ($\phi_N$) repräsentativ sind und in Drall- und Nutationsreglern derart miteinander verknüpft werden, daß der erstgenannte Signalanteil Größe bzw. Anzahl und Vorzeichen der Stelleingriffe bestimmt und der zweite, die Nutationsbewegung ($\phi_N$) darstellende Signalanteil für die Zeitpunkte bzw. den Phasenwinkel ($\beta_N$) der Stelleingriffe innerhalb einer Nutationsperiode verantwortlich ist. Die vorliegende Erfindung befaßt sich mit Verbesserungen von Einrichtungen zur Querachsenregelung der vorgenannten Art. Diese weisen nämlich einige wesentliche Mängel auf:

Nach den Merkmalen solcher Vorrichtungen wird ein Stelleingriff nur dann ausgelöst, wenn die Drallabweichung von der Bahnnormalen ($H_X$, $H_Z$) im Raum - dargestellt durch den Bahnbewegungsanteil ($\phi_0$, $\psi_0$) der Ablagesignale - bestimmte, durch Totzonen vorgegebene Schwellwerte ($d_\phi$, $d_\psi$) überschreitet ohne Rücksicht darauf wie groß die dem Bahnbewegungsanteil überlagerte Nutationsschwingungsamplitude ($A_N$) auch immer sein mag. Bei Kommunikations- und Anwendungssatelliten müssen nun bekanntlich zur Einhaltung von Inklination der Umlaufbahn und Position des Raumfahrzeuges auf seiner Bahn in regelmäßigen Zeitabständen Bahnkorrekturmanöver durchgeführt werden, in deren Verlauf Störmomente auf das Fahrzeug einwirken, die um ca. 5 Zehner-Potenzen höher sind als im Satellitennormalbetrieb und entsprechend heftige Betätigung der Reaktionsdüsen zur Erzeugung von Regelmomenten um alle Fahrzeugachsen zur Folge haben. Nach deren Beendigung können je nach Größe und zeitlicher Zuordnung der um die Querachsen zuletzt abgegebenen Stellimpulse in der Phase des Übergangs zur Normalbetriebsregelung der hier vorliegenden Art erhebliche Nutationsamplituden auftreten, bei gleichzeitig willkürlicher Lage des Drallvektors insbesondere auch innerhalb der oben genannten Totzonegrenzen, bei deren Überschreiten erst Stelleingriffe ausgelöst werden, die dann allerdings gleichermaßen auch optimalen Nutationsabbau bewirken. Für einen, mit einem festen Drallrad von nominal 50 Nms ausgerüsteten, typischen, dreiachsenstabilisierten Satelliten und bei einem Störmoment von $10^{-5}$ Nm unter Normalbetriebsbedingungen würde z.B. eine solche, keiner passiven oder aktiven Dämpfung ausgesetzte Restnutationsschwingung bis zu 1,2 Stunden bestehen bleiben, wenn die Drallorientierung gerade innerhalb eines zulässigen Totzonebereiches von 0.025° läge, nämlich solange, bis die Drallablage von einer Ansprechschwelle (z.B. $-d_\phi$) bis zur anderen ($+d_\phi$) hindurchgewandert ist. Bei größeren Ansprechschwellen wären die Zeiträume noch entsprechend länger. Während dieser Zeit würde das Ausrichtfehlerbudget für die Lageregelung durch die ungedämpfte Restnutation in unerwünschter Weise beeinträchtigt.

Des weiteren ist die ausschließliche Verwendung von Reaktionsdüsen für die Regelung der Querachsenbewegung solcher Raumfahrzeuge grundsätzlich mit gewissen Nachteilen und Risiken behaftet. Die Erzeugung von Regelmomenten mittels chemischen Triebwerken ist zwangsläufig mit Treibstoffverbrauch verbunden, was bei begrenztem Treibstoffvorrat die Missionsdauer beeinträchtigt. Darüber hinaus müssen zumindestens die um die Fahrzeugquerachsen Stellmomente erzeugenden Reaktionsdüsen samt dem zugehörigen Leitungssystem, Ventilen und dergleichen über die gesamte Lebensdauer aktiviert bleiben, was zu Treibstoff- "Leckverlusten" und zu Zuverlässigkeitseinbußen führen kann, z.B. wenn sich im Treibstoff enthaltene, geringfügige Schmutzpartikel in den Schaltventilen festsetzen oder die Leitungs- und Ventilverbindungen Undichtigkeiten aufweisen. In Anwendungssatelliten sind daher vielfach auch für die Regelung um die Querachsen im Normalbetrieb zusätzlich andere Stellglieder wie z.B. Reaktionsräder, Drallräder in V-Konfiguration oder Kardanrahmen zur Verstellung des gespeicherten Dralls, bzgl. der Fahrzeugachsen, magnetische Momentengeber und dergleichen entweder einzeln oder in geeigneten Kombinationen vorgesehen, die insbesondere kontinuierlich einstellbare Stellmomente erzeugen und in herkömmlichen Systemen eigene Regler anderer Struktur und Parameter erfordern. In der Übergangsphase zum Normalbetrieb mit anderer Regler- und Stellgliedkonfiguration treten dann infolge von Einschwingvorgängen vorübergehend große Ausrichtfehler auf, zu deren Verringerung oder Unterdrückung häufig zusätzliche Transitionsregeler eingesetzt werden müssen, was die Komplexität des Regelungssystems in unerwünschter Weise erhöht. Bei Verwendung von Reaktionsrädern oder kardanisch gelagerten Drallrädern muß üblicherweise der von äußeren Störmomenten herrührende in den Querachsen akkumulierte Drall bei Überschreiten zulässiger Maximalwerte entladen werden z.B. über die erwähnten magnetischen Momentengeber oder auch mit Hilfe von Reaktionsdüsen, vorzugsweise während der periodisch notwendigen Bahnkorrekturmanöver zu deren Durchführung in jedem Fall die Aktivierung von Reaktionstriebwerken unerläßlich ist. Letztere Möglichkeit bietet sich insbesondere an bei Verwendung von neueren Antriebssystemen wie Ionentriebwerken, Arcjets und dergleichen, die zwar erheblich höheren spezifischen Impuls aber gleichzeitig auch niedrigeres Schubniveau aufweisen, weshalb in diesen Fällen Bahnkorrekturen sehr viel häufiger, z.B. täglich über Zeiträume von Stunden durchgeführt werden müssen.

Die Erfindung hat sich nun die Aufgabe gestellt verbesserte Vorrichtungen der vorstehenden Art zu schaffen, die unter allen Bedingungen eine optimale d.h. möglichst rasche und treibstoffsparende Nutationsdämpfung, insbesondere in der Übergangsphase nach Bahnkorrekturmanövern auch dann gewährleisten wenn die Orientierung des Drallvektors im Raum innerhalb der vorgegebenen, zulässigen Grenzen liegt. Gleichzeitig soll die Einrichtung auch für die Querachsenregelung in der nachfolgenden Normalbetriebsphase unter Verwendung andersartiger, kontinuierlich arbeitender Stellglieder einsetzbar sein, ohne daß zusätzliche Einschwingvorgänge und Transitionsfehler auftreten. Dies wird erfindungsgemäß dadurch erreicht, daß sowohl die Abweichung der Drallrichtung im Raum ($H_Z$, $H_X$) als auch die Nutationsamplitude ($A_N$) mit Hilfe getrennter Totzoneglieder laufend bezüglich Überschreitens vorgegebener Schwellwerte ($\pm d_\phi$, $\pm d_\psi$, $d_N$) überprüft werden und nach später noch eingehender zu erläuternden Gesetzmäßigkeiten Stelleingriffe allein zum Zwecke des Nutationsabbaus auch dann ausgelöst werden, wenn sich der Fahrzeugdrallvektor Innerhalb der vorgegebenen zulässigen Grenzen ($\pm d_\phi$, $\pm d_\psi$) befindet. In einer weiteren Ausgestaltung der Erfindung werden die zur Drallregelung und Nutationsdämpfung der genannten Art gebildeten Signale unter Vermeidung von Transitionsstörungen sowohl in der Übergangsphase unmittelbar weiterverwendet zum Abbau eventuell dann noch vorhandener Restnutation als auch in der anschließenden Phase der Normalbetriebsregelung mit Hilfe andersartiger, insbesondere kontinuierlich arbeitender Stellglieder der bereits genannten Art.

Die wesentlichen Merkmale der Erfindung sollen nachfolgend an Hand von Ausführungsbeispielen näher erläutert werden. Es zeigen:

Figur 1 - in schematischer Form prinzipiell mögliche Anordnungen von Meß-und Stellglieder in einem dreiachsenstabilisierten Satelliten mit gespeichertem Drall

Figur 2a - ein vereinfachtes Blockschaltbild einer Vorrichtung zur Drall-und Nutationsregelung gemäß der Erfindung bei Verwendung eines die Winkellage um nur eine Querachse (X-Achse) - messenden Lagesensors

Figur 2b - ein Logik-Schema zur optimalen Drall- und Nutationsregelung gemäß der Erfindung

Figur 2c - ein Funktionsschaltbild nach Fig. 2a mit Anpassung an variable Systemparameter

Figur 3a - 3c geometrische Darstellungen der Phasenbedingungen für einen und zwei Stelleingriffe pro Nutationsperiode um verschiedene Satellitenachsen

Figur 4a - eine erfindungsgemäße Vorrichtung bei Lagemessung und -regelung um beide Querachsen

Figur 4b - ein Blockschaltbild einer Normalbetriebsregelung mit Reaktions-oder kardanisch gelagerten Drallrädern

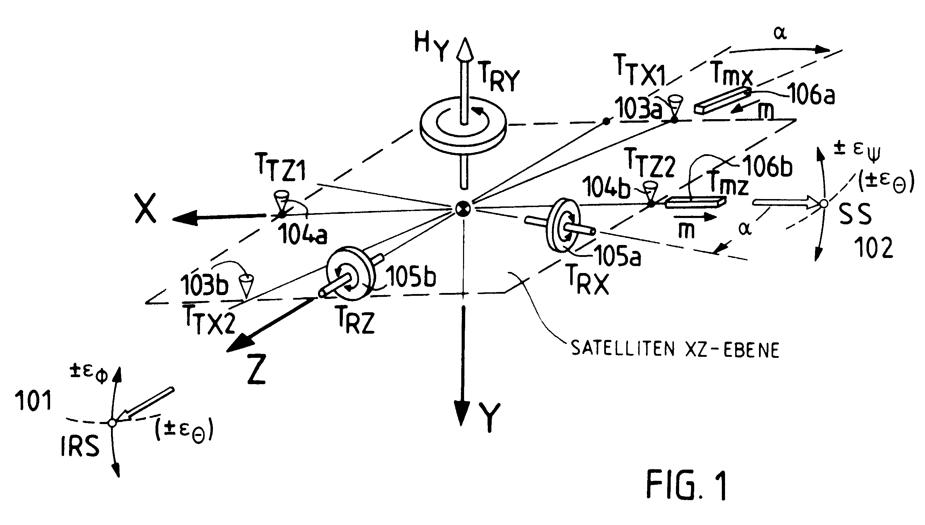

Figur 1 zeigt eine prinzipiell mögliche Anordnung von Meß- und Stellgliedern für die Erfassung und Regelung der Querachsenbewegung (X-, Z-Achse) eines Fahrzeuges mit gespeichertem Drall ($H_y$), dargestellt durch ein fest eingebautes Drallrad (107), mit dessen Hilfe in bekannter Weise die Regelung des Fahrzeuges um seine im folgenden nicht weiter betrachtete dritte Achse (y-Achse) bewerkstelligt wird. In Nominalorientierung soll die Fahrzeug-Z-Achse zum Erdmittelpunkt, die X-Achse in Bewegungsrichtung und die Y-Achse senkrecht zur Umlaufebene in südlicher Richtung zeigen. Lagefehler um die X-Achse ($\epsilon_\phi$) können z.B. von einem in Fahrzeug-Z-Richtung orientierten Erdinfrarotsensor (101), Ablagen um die Fahrzeug-Z-Achse in weiten Bereichen durch geeignete Anordnungen von Sonnensensoren gemessen werden, deren optische Achsen parallel zur X-Z-Ebene des Satelliten in verschiedenen Richtungen angeordnet sind und von denen in Figur 1 ersatzweise nur einer in -X-Achsenrichtung zeigend angedeutet ist. Kontinuierliche Roll- und Gierreferenz kann bekanntlich auch mit Hilfe von Sternsensoren, vorzugsweise mit Blickrichtung nach Norden (Polaris) oder Süden (Canopus) gewonnen werden. Als Stellglieder sind in Figur 1 sowohl Triebwerke (103a, 103b, bzw. 104a, 104b) zur Erzeugung im allgemeinen pulsförmiger Stellmomente um die Fahrzeugroll- (X-), bzw. Gier-Achse (Y-Achse als auch Reaktionsräder (105a, 105b) und magnetische Momentengeber (106a 106b) angedeutet, die bei entsprechender Ansteuerung sowohl zur Erzeugung pulsförmiger als insbesondere auch kontinuierlicher Stellmomente um die Fahrzeug-X- und Z-Achse geeignet sind. Zur Realisierung des WHECON-Prinzips, das in bekannter Weise die Stabilisierung eines drallbehafteten Fahrzeugs um beide Querachsen mittels eines die Ablage um nur eine Körperachse (X-Achse, $\epsilon_\phi$) messenden Sensors ermöglicht, können die um die Fahrzeug-X-Achse Momente erzeugenden Stellglieder (103a, 103b, 105a, 106a) - wie in Figur 1 dargestellt - insbesondere n der Fahrzeug-X/Z-Ebene um einen Winkel ($\alpha$ = WHECON-Winkel) gedreht angeordnet sein so daß bei ihrer Betätigung gleichzeitig eine Momentenkomponente entgegengesetzten Vorzeichens um die Fahrzeug-Z-Achse entsteht. Ersatzweise können aber auch die um die Fahrzeug-X- und Z-Achse Momente erzeugenden Stellglieder gleichzeitig mit entsprechenden, die gewünschte Momentenkopplung bewirkenden Stellkommandos beaufschlagt werden. Anstelle der hier als Beispiel gezeigten Reaktionsräder können natürlich auch Drallräder kardanisch gelagert um eine oder zwei Achsen, fest eingebaute Drallräder in V-Konfiguration einzeln oder kombiniert mit Reaktionsrädern in entsprechender Anordnung eingesetzt werden. Die gerätetechnische Ausrüstung nach Figur 1 soll lediglich als Beispiel zur Erlauterung der Wirkungsprinzipien der Erfindung dienen.

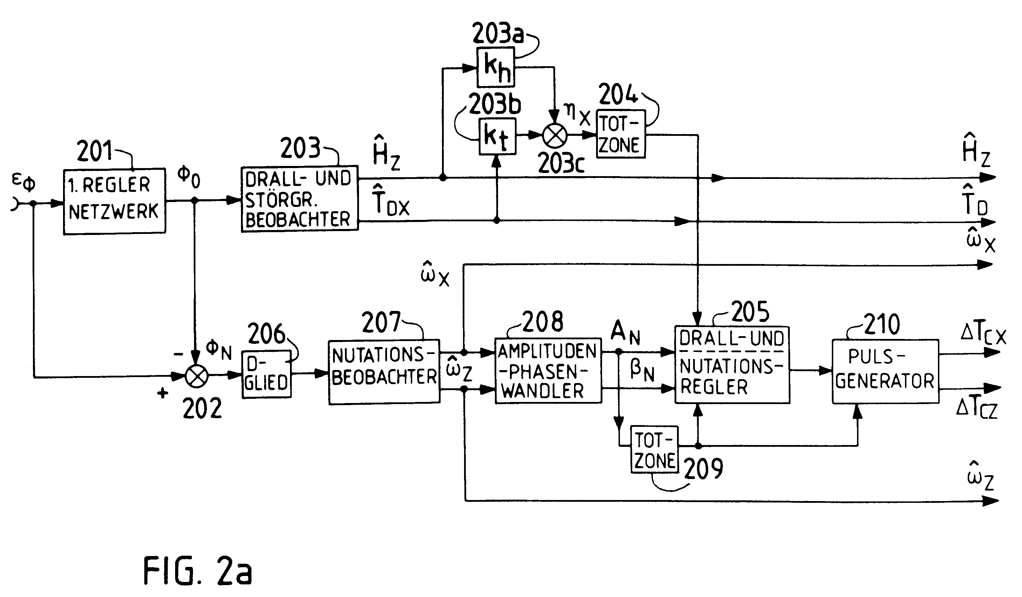

Zum Verständnis des Wirkungsprinzips der vorliegenden Erfindung dient das Blockschaltbild nach Figur 2a. Für den einfachsten Fall einer Drall- und Nutationsregeleinrichtung der hier betrachteten Art zur Stabilisierung beider Fahrzeugquerachsen mittels nur eines den Winkelfehler ($\epsilon_\phi$) um die erste Achse (X-Achse) messenden Lagesensors (101 nach Figur 1) sind die wichtigsten Funktionselemente schematisch dargestellt in bekannter Weise wird aus dem Ablagesignal ($\epsilon_\phi$) über ein erstes Reglernetzwerk (201) ein für die Bahnbewegung repräsentativer Signalanteil ($\phi_0$) und durch Subtraktion vom Eingangssignal ($\epsilon_\phi$) über eine Summierstelle (202) ein für die Nutationsbewegung des Fahrzeuges repräsentativer Signalanteil ($\phi_N$) gebildet. Über Drall- und Störgrößenbeobachter (203) verschiedener Komplexität, je nach Ausführungsform, werden in ebenfalls bekannter Weise Schätzwerte für Störmomente ($T_{DX}$) und mindestens eine Komponente des Fahrzeugdralls ($H_Z$) gebildet, deren über geeignete Aufschaltfaktoren (203a, 203b) und eine Summierstelle (203c) gebildete Linearkombination ($\eta_X$) nach Durchlaufen eines Totzonegliedes (204) in einem Drall- und Nutationsregler (205) weiter verarbeitet wird. Der Nutationsregler legt mit Hilfe des Phasenwinkels ($\beta_N$) der Nutationsschwingung die Zeitpunkte für die Auslösung von Stelleingriffen ($\Delta T_{cx}$, $\Delta T_{cz}$) fest nach Kriterien die abhängig sind:

- vom Verhältnis der Nutationsamplitude ($A_N$) zum Impulsinkrement ($\Delta P_X$)
- der Anzahl der Stellimpulse pro Nutationsperiode (1 oder 2).

Die der WO 89/02622 zu entnehmenden mathematischen Bedingungen für die Bestimmung der optimalen Stelleingriffe bekannter Art d.h. zur gleichzeitigen Drall- und Nutationsregelung sind der Vollständigkeit halber in der Anlage nochmals zusammengestellt. Nutationsamplitude ($A_N$) und -phase ($\beta_N$) werden aus dem bereits erwähnten, für die Nutationsbewegung repräsentativen Signalanteil ($\phi_N$) z.B. über Differenzierglieder (206), Nutationsbeobachter (207) und Amplituden/Phasenwandler (208) gewonnen. Die Bildung von Winkelgeschwindigkeitssignalen für die Nutationsschwingung aus der Ablagemessung über Differenzierglieder und Nutationsbeobachter erübrigt sich natürlich, wenn bei Vorhandensein von Geschwindigkeitskreiseln die Winkelgeschwindigkeiten um eine oder beide Fahrzeugquerachsen direkt gemessen werden können. Stelleingriffe sollen nun bei Überschreiten der zulässigen Drallablage ($\pm$ $d_\phi$) in bekannter Weise dann erfolgen, wenn der Phasenwinkel ($\beta_N(t)$) der Nutationsbewegung den für den gleichzeitigen Nutationsabbau optimalen Wert annimmt:

$$\gamma_0 \; + \; \Delta\gamma - \Delta\beta \leq \beta_N(t) \leq \gamma_0 \; + \; \Delta\gamma - \Delta\beta \qquad \text{(Gleichung 1)}$$

wobei $\Delta\beta$ einen zulässigen Toleranzbereich z.B 0.1 Radianten) um den exakten Eingriffspunkt darstellt und die Werte von $\gamma_0$ und $\Delta\gamma$ abhängig von den oben erwähnten Kriterien so zu wählen sind wie zusammengestellt in Tabelle 1a für einen, bzw. in Tabelle 1b für 2 Stelleingriffe (Impulsinkremente $\Delta P_x$) pro Nutationsperiode, unter Berücksichtigung aller optimalen Eingriffsmöglichkeiten über eine volle Nutationsperiode ($0 \leq \beta_{N1} \leq 2\pi$). Die jeweils Zwei Phasenwinkel ($\beta_{N2}$) für die zweiten Impulse tragen dem Umstand Rechnung, daß das bis zur Auslösung des 2. Impulses verbleibende Zeit- bzw. Phasenintervall ($\Delta\beta_{N2}$) kürzer ist ($\Delta\beta_{N2} \leq \pi/k$) als die erforderliche Einschwingdauer ($\tau = T_N/2k$, $T_N$ - Nutationsperiode, k - konstant, z.B. 1 oder 2) des Nutationsbeobachters oder ausreichend lang.

Die Vorrichtung nach Figur 2a unterscheidet sich von bekannten Einrichtungen dieser Art im wesentlichen in folgenden Punkten:

- Stelleingriffe sollen nicht nur dann vorgenommen werden, wenn die Bahndrallkomponente ($\hat{H}_Z$) bzw. der sie repräsentierende Signalanteil ($\phi_0$) eine durch eine Totzone (204) vorgegebene zulässige Schranke ($d_\phi$) überschreitet sondern auch für Werte unterhalb dieser Grenze, sofern die Nutationsamplitude ($A_N$) eine zweite durch ein weiteres Totzoneglied (209) ebenfalls vorgegebene Schwelle ($d_N$) übersteigt.

4

- Gemäß einer besonders vorteilhaften Ausgestaltung der Erfindung werden die zur Drall- und Nutationsregelung bekannter und wie vorstehend aufgezeigt zur Nutationsdämpfung erweiterter Art gebildeten Signale ($\hat{H}_Z$, $\hat{T}_{Dx}$, $\hat{\omega}_X$ $\hat{A}_N$, $\beta_N$) auch zur Ansteuerung kontinuierlich arbeitender Stellglieder wie Reaktionsräder oder magnetische Momentengeber in zweifacher Hinsicht eingesetzt nämlich:

- durch Beaufschlagung dieser Stellglieder mit impulsförmigen Signalen ($\Delta T_{cx}$, $\Delta T_{cz}$) einstellbarer Dauer und eventuell auch Amplitude (variables $\Delta P$), wie in Figur 2a angedeutet durch den zusätzlichen Eingriff in einen der Bildung von Ansteuerimpulsen dienenden Pulsgenerator (210) über das die Nutationsamplitude überwachende zusätzliche Totzoneglied (209) z.B. zum schnellstmöglichen Nutationsabbau und

- durch direkte Beaufschlagung mit den ohnehin verfügbaren optimalen Schätzwerten von Fahrzeugdrall ($\hat{H}_Z$), Störmomenten ($\hat{T}_{Dx}$) und Winkelgeschwindigkeiten ($\hat{w}_x$, $\hat{w}_z$), die zu diesem Zweck in der schematischen Darstellung von Figur 1 herausgeführt sind zur werteren Verwendung in einer noch zu beschreibenden Weise

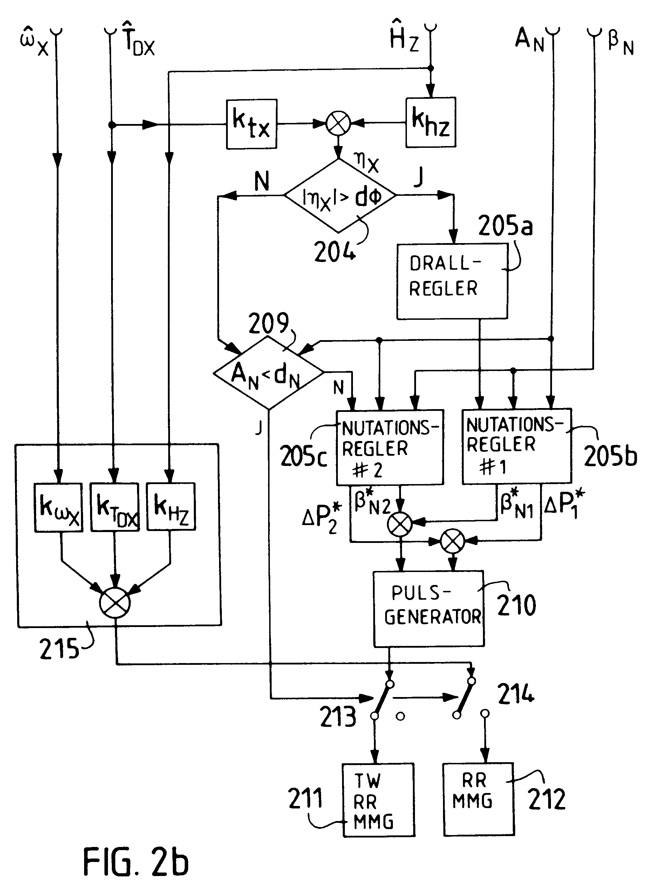

Zur näheren Erläuterung der Erfindungsgedanken dient das Logikschema nach Figur 2b. Dort sind die oben genannten Totzoneglieder (204, 209) mit ihren Ansprechschwellen ($d_\phi$, $d_N$) als Entscheidungselemente (204 209) dargestellt. Der Entscheidung des Totzonegliedes (204) wird Vorrang eingeräumt, d.h. wenn das aus Drallablage und Störmomentenschätzung gebildete Signal ($\eta_x$) die zulässige Ansprechschwelle ($d_\phi$) überschreitet (J = Ja, N = Nein) erfolgt der Ablauf unter Einschaltung des Drallreglers (205a), Nutationsreglers # 1 (205b) und Pulsgenerators (210) bis zur Ansteuerung der Stellglieder wie Reaktionstriebwerke "TW" und/oder kontinuierlich arbeitenden Stellglieder wie Reaktionsräder "RR" oder auch magnetischen Momentegeber "MMG" (211) mittels impulsförmigen Signalen unter Berücksichtigung der optimalen Phasenbedingungen für Stelleingriffe in herkömmlicher Weise, falls die Impulsdauer klein gegenüber der Nutationsperiode ist. Auf die Unterschiede zur pulsförmigen Ansteuerung an sich auch kontinuierlich arbeitender Stellglieder über Zeitintervalle die nicht mehr als kurz bezüglich der Nutationsperiode angesehen werden können soll später noch eingegangen werden.

Dem ersten Totzoneglied (204) ist im Fall einer "Nein"-Entscheidung, d.h. im Fall keiner unzulässig hohen Drallablage ($> d_\phi$) dar der zweiten Totzone (209) entsprechende Entscheidungselement nachgeschaltet mit dessen Hilfe festgestellt wird ob die Nutationsamplitde ($A_N$) kleiner ist als eine vorgegebene zulässige Schranke ($d_N$). Wenn dies nicht der Fall ist (N-Ausgang), so wird ein nach noch näher zu erläuternden anderen Kriterien als im vorgenannten Fall arbeitender Nutationsregler # 2 (205c) eingeschaltet dessen Aufgabe darin besteht, durch Beaufschlagung entsprechender Stellglieder mit ebenfalls pulsförmigen Signalen optimalen Nutationsabbau zu bewerkstelligen ohne dabei die Drallablage in ungünstiger Weise zu beeinflussen. Ist die Nutationsamplitude ($A_N$) unter den vorgegebenen, zulässigen Wert ($d_N$) gesunken so wird über Umschalter (213, 214) von diskontinuierlicher, pulsförmiger auf kontinuierliche Regelung umgeschaltet, die z.B. einfach aus den verfügbaren Signalen ($\hat{w}_X$, $\hat{T}_{Dx}$, $\hat{H}_Z$) über entsprechende Verstärkungsfaktoren ($k_{wx}$, $k_{TDx}$, $k_{HZ}$) als Zustandsregler (215) unter Verwendung der bereits mehrfach erwähnten, kontinuierlich arbeitenden Stellglieder (212) ausgebildet sein kann. Damit wird der erwünschte glatte Übergang zu einer kontinuierlichen Querachsenregelung ohne unerwünschte, mit hohen Ablagen verbundene Einschwingvorgänge sichergestellt.

Während bei diskontinuierlich arbeitenden Stellgliedern wie Reaktionsdüsen das Impulsinkrement ($\Delta P$) üblicherweise nur über die Pulsdauer ($\Delta t$) beeinflußbar ist, läßt sich bei impulsförmiger Ansteuerung an sich auch kontinuierlich arbeitender Stellglieder der bereits mehrfach genannten Art das Impulsinkrement prinzipiell in zweifacher Hinsicht variieren, nämlich über das Momentenniveau und die Impulsdauer. Zur zeitoptimalen, d.h. schnellstmöglichen Nutationsdämpfung und Drallregelung gemäß der vorliegenden Erfindung wird zunächst davon ausgegangen, daß unter Ausnutzung des maximal verfügbaren Momentenniveaus die Zeitdauer der Stelleingriffe beeinflußt wird. Ein typisches Reaktionsrad von 1 - 5 Nms Drallspeicherkapazität kann z.B. ein maximales Stellmoment von etwa 0.01 - 0.1 Nm erzeugen. Ein magnetischer Momentengeber von z.B. 100 - 500 $Am^2$ bei normaler Stärke des Erdmagnetfeldes von $10^{-7}$ Tesla im geosynchronen Orbit gar nur 1 - 5 x $10^{-5}$ Nm. Chemische Triebwerke weisen dem gegenüber ein sehr viel höheres Schubniveau von ca. 1 - 10 N auf und erzeugen somit bei einem Hebelarm von typisch 1 m ein Moment von 1 - 10 Nm. Bei Einsatz der erstgenannten Steliglieder sind daher im Fall voller Aussteuerung zur Erzeugung des gleichen (Momenten-) Impulsinkrementes mindestens die 10 - 100 fache Impulsdauer erforderlich, d.h. Eingriffszeiten, die umso weniger gegenüber der Dauer einer Nutationsschwingung vernachlässigbar sind, je niedriger das verfügbare Stellmomentenniveau liegt. Erfindungsgemäß behält die allgemeine Form der Bestimmungsgleichung (Gleichung 1) für den optimalen Phasenwinkel ($\beta_N(t)$) bei impulsförmigen Stelleingriffen sowohl zur kombinierten Drall- und Nutationsregelung bereits bekannter Art als auch zur Nutationsdämpfung gemäß der vorliegenden Erweiterung nach wie vor ihre Gültigkeit auch bei großen Impulsdauern, mit dem Unterschied, daß die bisher als feste Toleranzschranke für den Eingriffszeit-

punkt definierte Größe ($\Delta\beta$) im vorliegenden Fall wie folgt definiert wird:

$$\Delta\beta = \omega_N \Delta t = \arcsin \frac{\sqrt{I_x I_z}}{2 T_{ci}} \omega_N^2 (A_{N+1} - A_N) \qquad (Gleichung\,2)$$

Mit: $\Delta\beta \leq \pi/2$, vorzugsweise $\Delta\beta = \pi/4$     (Gleichung 2a)

wobei:

$A_N$; $A_{N+1}$ -      die Nutationsamplitude ($A_N$) vor bzw. nach dem Stelleingriff ($A_{N+1}$)
$I_x, I_z$ -      Querachsenträgheitsmomente
$T_{ci} = T_{cx}, T_{cz}$ -      das Stellmoment um die jeweilige (X, Z) Fahrzeugachse
$w_N$ -      die Nutationsfrequenz
$\Delta t$ -      die halbe Dauer des Stellimpulses

und in bekannter Weise Nutationsamplitude ($A_N$) und -phase ($\beta_N$):

$$A_{N+1};\ A_N = \sqrt{\frac{\omega_x^2}{\omega_N^2} + \frac{I_z}{I_x}\frac{\omega_z^2}{\omega_N^2}} \qquad (Gleichung\,3a)$$

$$\beta_{N+1};\ \beta_N(t) = \arctan \sqrt{\frac{I_z}{I_x} \cdot \frac{\omega_z}{\omega_x}} \qquad (Gleichung\,3b)$$

aus den geschätzten Winkelgeschwindigkeiten ($\hat{w}_x$, $\hat{w}_z$) des Nutationsbeobachters (207, Figur 2a) vor bzw. nach dem Stelleingriff gewinnbar sind. Umgekehrt ist bei vorgegebenem Momentenniveau ($T_c$) der maximal erreichbare Nutationsabbau ($A_{N+1} - A_N$) durch einen einzigen Stelleingriff bestimmbar gemäß:

$$A_{N+1} - A_N = \frac{2 T_c \omega_N^2}{\sqrt{I_x I_z}} \qquad (Gleichung\,2b)$$

beim Maximalwert von $\Delta\beta = \pi/2$ bzw. einer halben Impulsdauer $\Delta t$ von einer Viertel-Nutationsperiode ($T_N/4$). Einfach ausgedrückt wird ein längerer Stellimpuls der Breite $2\Delta\beta$ bin. der Dauer $2\Delta t$ symmetrisch um den optimalen Eingriffszeitpunkt verteilt. Gleichung 2 stellt eine gute Näherung für den häufigen Fall annähernd gleicher Querachsenträgheitsmomente ($I_x$, $I_z$) dar.

Im folgenden sollen die anders gearteten Kriterien für Stelleingriffe zum vorrangigen Zweck der Nutationsdämpfung gemäß der Erfindung näher erläutert werden. Zum besseren Verständnis werden die Phasenbedingungen für optimale Stelleingriffe zunächst anhand von geometrischen Darstellungen der Nutationsbewegung in der Roll/Gierebene des Satelliten veranschaulicht.

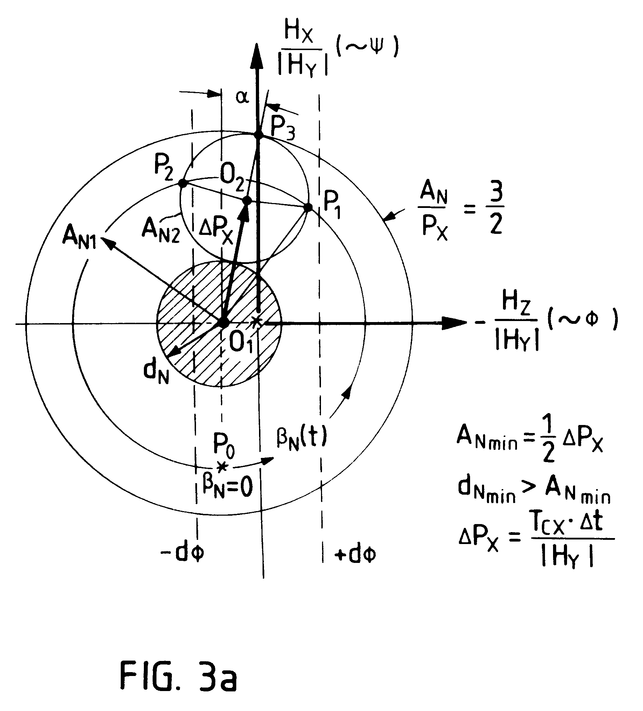

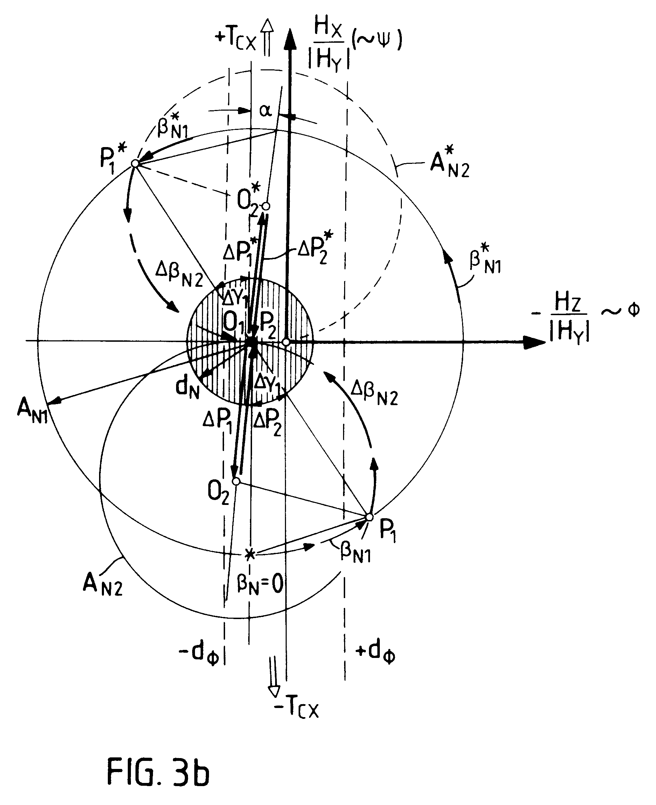

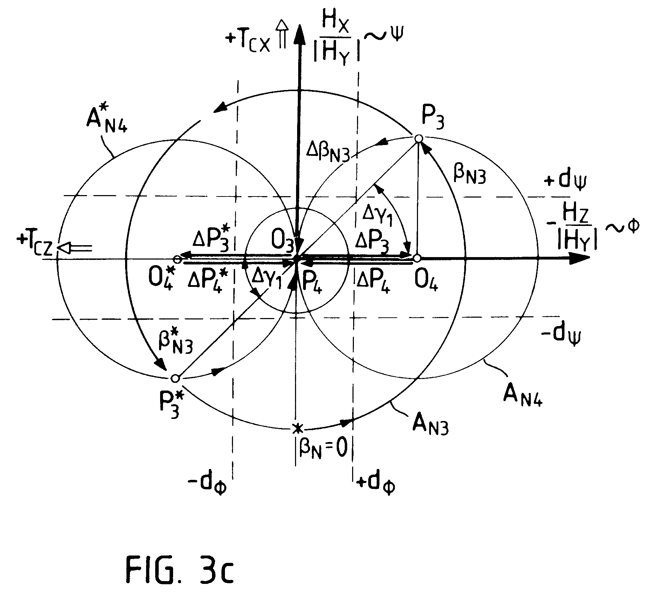

Figur 3 a zeigt die Lage des Drallvektors und die Nutationsbewegung in den zueinander orthogonalen Querachsen des Fahrzeuges, dargestellt durch die normierten Drallkomponenten ($-H_z/|H_y|$, $H_x/|H_y|$) bzw. diesen entsprechende Euler-Winkel ($\phi$, $\psi$) in der Umlaufebene. Der Drallvektor befinde sich (im Punkt $O_1$) zwar innerhalb der vorgegebenen, zulässigen Totzonegrenzen ($\pm d_\phi$) z.B. im Bereich $-d_\phi \leq (-H_z/|H_y|) \leq 0$ weshalb das Regelungssystem herkömmlicher Art nicht eingreift, jedoch bewegt sich die zur Zeichenebene orthogonale Fahrzeug Y-Achse auf einem Nutationskegel ($A_{N1}$) großer Amplitude, was entsprechend hohe, unerwünschte, periodische Schwingungen der Fahrzeugroll-/gierlage mit Nutationsfrequenz zur Folge hat. Im allgemeinen Fall stellen sich die Nutationsbewegungen nicht als Kreise sondern als Ellipsen dar, doch wurden im vorliegenden Fall aus Gründen der Vereinfachung gleiche Querachsen-Trägheitsmomente ($I_x$ =

$I_Z$ = I) angenommen, was insbesondere auch bei 3-Achsen-stabilisierten Satelliten mit guter Näherung zutrifft. In Figur 3a ist auch die im Rahmen der vorliegenden Erfindung durch eine zweite Totzone (309, Figur 2a) vorgegebene, zulässige Nutationsamplitude ($d_N$) als schraffierter Bereich um die Drallposition ($O_1$) eingezeichnet. Eine Korrekturstrategie mit nur einem Impuls pro Nutationsperiode liefert im zeitlichen Mittel dann den geringsten Ausrichtfehler, wenn die Amplitude der Restnutation auf den halben Wert eines - z.B. bei Reaktionsdüsen - minimal möglichen (normierten) Impulsinkrementes ($\Delta P_x/2$) geregelt wird. Das normierte Impuls- oder Drallinkrement ist definiert wie folgt:

$$\Delta P_x = \frac{T_{cx} \cdot \Delta t}{|H_y|} \qquad (Gleichung\ 4)$$

mit

$T_{cx}$ -       Stellmomenten- Niveau

$\Delta t$ -       Impulsdauer

Andernfalls würde beim nächsten Stelleingriff, dessen Betrag ja das minimale Impulsinkrement nicht unterschreiten kann eine größere Restnutation und damit geringere Ausrichtgenauigkeit verbleiben, als dem halben Impulsinkrement entspricht. Daraus folgt auch unmittelbar, daß die Ansprechschwelle des zweiten Totzonegliedes (309) mindestens auf diesen Wert ($\Delta P_x/2$) eingestellt sein muß um Grenzzyklusschwingungen mit Nutationsfrequenz als Folge der 1-Impuls-Nutationsdämpfungsstrategie zu vermeiden. Unter Bezug auf Figur 3a muß der optimale Stelleingriff, der eine Verschiebung des Drallvektors um ein normiertes Impuls-bzw. Drallinkrement ($\Delta P_x$), in Richtung der Momentenachse bewirkt, dann erfolgen, wenn der Anfangsnutationskreis ($A_{N1}$) sich mit dem "Zielnutationskreis" (mit der beabsichtigten Restamplitude $A_{N2} = \Delta P_x/2$) um die neue Position des Drallvektors ($O_2$) nach seiner Verschiebung (um $\Delta P_x$) schneidet, d.h. bei Phasenwinkeln ($\beta_N(t)$) die einem der beiden möglichen Schnittpunkte ($P_1$, $P_2$) entsprechen. Diese Bedingung ist im vorliegenden Fall offensichtlich erfüllt bei

$\beta_N = \pi - \alpha - |\Delta\gamma|$

oder

$\beta_N = \pi - \alpha + |\Delta\gamma|$

d.h. genau bei den an sich bereits bekannten optimalen Eingriffsbedingungen (Gleichung 1 mit $\gamma_0 = \pi - \alpha$ und dem richtig gewählten Vorzeichen von $\Delta\gamma$) Die Bezugsgröße ($\gamma_0$) in der allgemeinen Form der Eingriffsbedingungen nach Gleichung 1 definiert die Richtung der Stellmomentenachse (Richtung von $\Delta P$) bezogen auf den gewählten Nullpunkt Nutationsphase ($\beta_N(t)$) = 0 . Insbesondere behält die Tabelle 1a auch für den vorliegenden Fall prinzipiell ihre Gültigkeit, allerdings mit geänderten Kriterien für die Notwendigkeit eines Stelleingriffs, wie in Tabelle 2a, insbesondere erste und zweite Spalte, im Detail ausgeführt. Welche der beiden optimalen Eingriffsbedingungen tatsächlich wirksam wird, hängt von der augenblicklichen Phasenlage der Nutationsbewegung zu dem Zeitpunkt ab, wenn eine der beiden Schranken für die zulässige Nutationsamplitude (oder auch die Drallabweichung) überschritten wird. In Figur 3a ist auch noch der Grenzfall $A_N \geq 3\Delta P_x/2$ eingezeichnet, bei dem der amplitudenabhängige Anteil ($\pm \Delta\gamma$) des optimalen Phasenwinkels (Gleichung 1) gerade gleich 0 wird (Punkt $P_3$). Für noch größere Nutationsamplituden gilt auch hier in jedem Fall der Wert ($\Delta\gamma$) 0.

Die Phasenbedingungen für zwei Stelleingriffe pro Nutationsperiode um nur eine Fahrzeugachse (X-Achse) sind dargestellt in Figur 3b. In diesem Anschauungsbeispiel wird erneut davon ausgegangen, daß sich die Drallachsenrichtung innerhalb der zulässigen Grenzen ($\pm d_\phi$, Totzone 204) befindet (Punkt $O_1$), die Nutationsamplitude ($A_{N1}$) jedoch ihre durch eine zweite Totzone (209) vorgegebene zulässige Grenze ($d_N$) überschreitet, aber noch der Bedingung $A_{N1} < 2\Delta P$ genügt. Zur Nutationsdämpfung wird erfindungsgemäß beim optimalen Phasenwinkel ($\beta_{N1}$) ein erster normierter Stellimpuls ($\Delta P_1 = -\Delta P_x$) in negativer Richtung ausgelöst, der den Drallvektor gerade so (nach Punkt $O_2$) verschiebt, daß die Amplitude des neuen Nutationskegels ($A_{N2}$) gerade einem Minimal-Impulsinkrement entspricht. Dies ist bei Pulsauslösung gerade im Schnittpunkt ($P_1$) des alten ($A_{N1}$) und neuen Nutationskreises ($A_{N2}$) mit dem Phasenwinkel:

$\beta_{N1} = \pi - \alpha - \Delta\gamma_1 = \gamma_0 - |\Delta\gamma_1|$

EP 0 602 132 B1

der Fall (Toleranz $\Delta\beta$ vernachlässigt). Auf dem neuen Nutationskegel ($A_{N2}$) bewegt sich die Satellitenlage genau auf die Ausgangsposition des Drallvektors ($O_1$) zu, den sie nach Ablauf des Phasenwinkels $\Delta\beta_{N2}$ erreicht (Punkt $P_2 \equiv O_1$). Zu dem diesen Zustand entsprechenden Zeitpunkt wird durch einen, dem ersten entgegengesetzt gerichteten Impuls ($\Delta P_2 = -\Delta P_1 = +\Delta P_x$) der Drallvektor in den Ausgangspunkt ($O_1$) zurückgesetzt. Unter idealen Bedingungen ist dann die Restnutation gleich 0. Aus geometrischen Überlegungen (im Dreieck $O_1 O_2 P_1 P_2$) läßt sich die Beziehung ableiten:

$$\Delta\beta_{N2} = \pi - 2\Delta\gamma_1$$

Die Vorausberechnung dieser Größe ($\Delta\beta_{N2}$) erlaubt die Entscheidung ob für den Nutationsbeobachter genügend Zeit verbleibt zur Bildung eines hinreichend genauen neuen Schätzwertes für die Nutationsbewegung ($A_{N2}$, $\beta_N(t)$) insbesondere deren Phasenwinkel. Abhängig von den Beobachterzeitkonstanten, d.h. der Einschwingdauer sei diese Bedingung z.B. erfüllt für Werte $\Delta\beta_{N2} \geq \pi/k$, was für $k = 1$ einer halben, für $k = 2$ einer viertel Nutationsperiode entspricht. In diesem Fall soll (mit der Toleranzbreite $\Delta\beta$) der neue über den Nutationsbeobachter ermittelte Phasenwinkel als Eingriffskriterium für den zweiten Impuls benutzt werden gemäß der Bedingung:

$$\pi - \alpha - \Delta\beta \leq \beta_{N2}(t) \leq \pi - \alpha + \Delta\beta$$

Der Phasenwinkel ($\beta_N$) zählt dann wieder vom Nulldurchgang des neuen Nutationskreises ($A_{N2}$).

Andernfalls wird der zweite (positive, Impuls zum Zeitpunkt des vorausberechneten Phasenwinkels $\beta_{N2}$ = $\Delta\beta_{N2}$ nach Auslösung des ersten Impulses abgegeben. Die Wirkungsrichtung der Momenteninkremente ($\Delta P$) wird in der allgemeinen Form der Eingriffsbedingung (Gleichung 1) wieder durch die Bezugsgröße ($\gamma = \pi - \alpha$) vom Nullpunkt der Nutationsphase ($\beta_N(t) = 0$) aus gezahlt.

Aus Figur 3b geht ferner hervor, daß es noch eine zweite Möglichkeit für Stelleingriffe zur Nutationsdämpfung gibt, die allerdings nicht in der kürzestmöglichen Zeit (bezogen auf $\beta_N = 0$) zum Endzustand führt. Wird ein erster Stelleingriff - diesmal in positiver Richtung ($\Delta P_1^* = -\Delta P_1 = +\Delta P_x$) - beim Phasenwinkel $\Delta\beta_{N1}^*$ (Punkt $P_1^*$) vorgenommen, was den Drallvektor (von $O_1$ nach $O_2^*$) zuerst in entgegengesetzer Richtung zum ersten Fall verschiebt und beim optimalen Phasenwinkel ($\beta_{N2}^*$) auf dem dann gültigen Nutationskreis ($A_{N2}^*$) in negativer Richtung zurückgesetzt ($\Delta P_2^* = -\Delta P_1 = -\Delta P_x$) so wird die Nutation ebenfalls auf den Wert 0 gedämpft. Aus Figur 3b geht anschaulich hervor, daß sich in den mathematischen Bedingungen für die Auslösung des erste und zweiten Impulses dann lediglich die Werte der Bezugsgröße ($\gamma_0$) vertauschen Offensichtlich hängt in der Praxis die vorgenannte Reihenfolge der Stellimpulse wiederum vom Nutationszustand zu dem Zeitpunkt ab, wenn die Entscheidung über die Notwendigkeit von Stelleingriffen auf der Grundlage der zulässigen Schwellwerte ($d_N$ oder auch $\pm d_\phi$) fällt.

Der Vollständigkeit halber soll an dieser stelle darauf hingewiesen werden, daß bei Nutationsamplituden unterhalb einer technisch einwandfrei meßbaren Grenze (z.B. $A_N < a_N$) der Nutationsbeobachter nicht mehr in der Lage ist brauchbare Phasenwinkel ($\beta_N(t)$) der Nutationsbewegung zu liefern. Diese untere Grenze hängt maßgeblich von der Qualität der Meßsignale insbesondere deren Auflösungsvermögen (z.B. Quantisierung) und/oder Signal-/Rauschverhaltnis ab. In der Praxis ist es daher notwendig für Nutationsamplituden unterhalb dieses Minimalwertes ($a_N$) auf die Benutzung der Phaseninformation für die Pulsauslösung zu verzichten, da sonst eine sporadische Betätigung der stellglieder unausweichlich wäre. In diesem Fall ist die Auslösung des jeweils ersten Stelleingriffs nach Größe und Richtung ausschließlich von der Drallablage, d.h. Überschreitens der zulässigen Werte ($\pm d_\phi$, $\pm d_\psi$) in einer der beiden Achsenrichtungen abhängig und kann in der entsprechenden Bezugsrichtung ($\gamma_0$) jederzeit sofort eingeleitet werden.

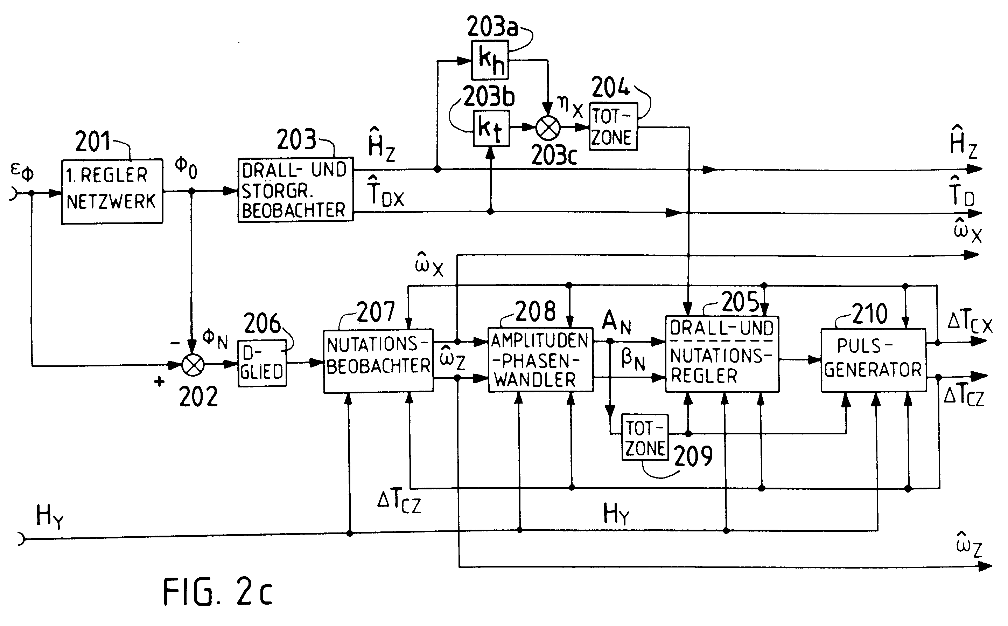

Aus den obigen Überlegungen zur Bestimmung des Phasenwinkels für den zweiten Stelleingriff folgt unmittelbar daß Nutationsbeobachter (207) und Amplituden-/Phasenwandler (208) zu jedem Zeitpunkt möglichst wirklichkeitsgetreu den Nutationsvorgang nachbilden sollen. Dies wird in an sich bekannter Weise gemäß Funktionsschaltbild 2c dadurch erleichtert, daß diesen Funktionselementen Änderungen der Parameter und dynamischen Zustände im System unmittelbar mitgeteilt und nicht erst über Ablagemessungen ($\epsilon_\phi$) des Satelliten beispielsweise über einen Erdeinfrarotsensor und zwischengeschaltete Reglernetzwerke (201) erkennbar werden. Wie in Figur 2c in schematischer Form dargestellt, werden dazu alle verfügbaren Größen wie abgegebenes Stellsignal ($\Delta T_{cx}$, $\Delta T_{cz}$) und tatsächlicher Wert des gespeicherten Dralls ($H_y$), z.B. aus Messungen der Drallraddrehzahl in die oben genannten Funktionselemente eingeführt.

Die vorstehend erläuterten Bedingungen für Stelleingriffe zur Nutationsdämpfung mit zwei Stellimpulsen pro Nutationsperiode um eine Fahrzeugachse (X-Achse) sind in Tabelle 2b nochmals übersichtlich zusammengestellt. Bei Schräganstellung der Stellmomentengeber (um den Winkel $\alpha$) gemäß Figur 3b ist es u.U. zweckmässiger, die Fallentscheidung über die Folge der Stelleingriffe zur Nutationsdämpfung von der Lage

8

des Drallvektors innerhalb der zulässigen Grenzen ($\pm$ $d_\phi$) abhängig zu machen. So ist bei Drallablage gemäß Figur 3b (d.h. $-d_\phi \leq \phi_0 \leq 0$) die zweitgenannte Strategie zur Nutationsdämpfung ($\Delta P_1^*$ bei $\beta_{N1}^*$, $\Delta P_2^*$ bei $\beta_{N2}^*$) eventuell vorzuziehen um ein Überschreiten der Drallschranke ($-d_\phi$) nach dem ersten Stellimpuls und ein eventuelles Eingreifen des Drallreglers zu vermeiden. Diesem Umstand ist in Tab. 2b dadurch Rechnung getragen, daß die letzgenannte Folge von Stelleingriffen jeweils zuerst angegeben ist.

Figur 3c zeigt in einer zu Figur 3b analogen Darstellung die Verhältnisse bei Stelleingriffen um die zweite Fahrzeugquerachse (Z-Achse). In diesem Fall wird davon ausgegangen, daß die Stellglieder nicht gegenüber der Fahrzeugquerachse zur Erzeugung einer Momentenkopplung um einen Winkel ($\alpha$) verdreht in der X-, Z-Ebene angeordnet sind. In diesem Zusammenhang sei daran erinnert, daß bei Einsatz von Stellgliedern zur Erzeugung von Momenten um beide Fahrzeugquerachsen sich im Prinzip auch ein Schrägeinbau der Momentengeber um die erste Achse erübrigt, da die gleichzeitige Betätigung der Stellglieder um beide Achsen (unter Berücksichtigung der richtigen Vorzeichen) einem Schrägeinbau entspricht. Figur 3c repräsentiert - abgesehen vom eventuellen Schrägeinhauwinkel ($\alpha$) der Momentengeber - eine um 90° gedrehte Darstellung der Nutationsbewegungen von Figur 3b. Die Drallablage wurde ferner zu Null angenommen. In der allgemeinen Form der Eingriffsbedingungen nach Gleichung 1 ist dann der für die Momentengeberachsen gültige Bezugswinkel ($\gamma_0$) entsprechend anzupassen. Obwohl sich Figur 3c lediglich auf die Eingriffsverhältnisse für zwei Impulse um die zweite Fahrzeugquerachse (Z-Achse) bezieht und nicht auf die Korrektur einer Drallablage ($H_x$/$Hy$ $\propto$ $\phi$) in X-Richtung, ist in dieser Abbildung auch eine Ansprechschwelle ($\pm$ $d_\phi$) für den allgemeineren Fall eingezeichnet, daß auch eine Ablagemessung ($\epsilon_\psi$) um diese Fahrzeugachse oder ein Schätzwert für die entsprechende Drallkomponente ($H_x$) verfügbar ist. Die Überlegungen zur Identifikation der Eingriffsbedingungen sind denen zu Figur 3b völlig analog und bedürfen daher keiner erneuten eingehenden Erläuterung. Die entsprechenden Größen im Nutationsdiagramm ($A_N$, $\beta_N$, $\Delta P$ und dergleichen) sind in dieser Darstellung zur Unterscheidung mit anderen Indizes (3 statt 1 für den ersten Impuls, 4 statt 2 für den zweiten) versehen.

Tabelle 2c enthält eine Zusammenstellung der Parameterwerte für die Auslösung von Nutationsdämpfungsimpulsen um die Z-Achse bei Anwendung der allgemein gültigen Beziehung für den Phasenwinkel der Stelleingriffe nach Gleichung 1. Bei Kenntnis der Gesetzmässigkeiten für Stelleingriffe um jede einzelne Querachse zur optimalen Nutationsdämpfung gemäß der vorliegenden Erfindung bereitet es dem Fachmann keine Schwierigkeiten für den jeweiligen Anwendungsfall - abhängig von den gerätetechnischen Möglichkeiten an Meß- und Stellgliedern - die besten Regelungsstrategien auszuwählen und nach Bedarf miteinander zu kombinieren. Insbesondere bieten sich z.B. an:

- Die Auslösung des schnellstmöglichen ersten Stelleingriffs um die X- oder Z-Achse je nach augenblicklicher Phasenlage der Nutationsbewegung, was zur Folge hat, daß die erforderliche Zeit ($\Delta T_{max}$) zur Nutationsdämpfung höchstens beträgt:

  - bei (zwei) Stelleingriffen um nur eine Achse (z.B. X-Achse):

    $$(\Delta T_{max})_1 = (1 - (\Delta\gamma_1)/\pi) \cdot T_N$$

  - bei Eingriffsmöglichkeit um beide Querachsen und 2 Stellimpulsen pro Nutationsperiode

    $$(\Delta T_{max})_2 = (3/4 - (\Delta\gamma_1)/\pi) \cdot T_N$$

    mit $T_N$ - Nutationsperiode ($2\pi/\omega_N$)
- Die Auswahl der Momentenachse unter Berücksichtigung der Drallablage derart, daß
  - bei Ein-Impuls-Strategie gleichzeitig die Lage des Drallvektors (innerhalb der Totzonebereiche ($d_\phi$, $d_\psi$) verbessert wird)
  - bei zwei Impulsen der Totzonebereich ($d_\phi$, $d_\psi$) zwischenzeitlich nicht verlassen wird
- Anpassung des Impulsinkrements ($\Delta P$) bei großen Nutationsamplituden ($A_N > 2\Delta P_{min}$) durch Änderung der Impulsbreite (z.B. bei Reaktionsdüsen) und/oder des Momentenniveaus (z.B. bei kontinuierlich arbeitenden Stellgliedern) entsprechend der Beziehung

  $$\Delta P = A_N/2$$

  um vollständigen Nutationsabbau mit max. 2 Impulsen zu erreichen.

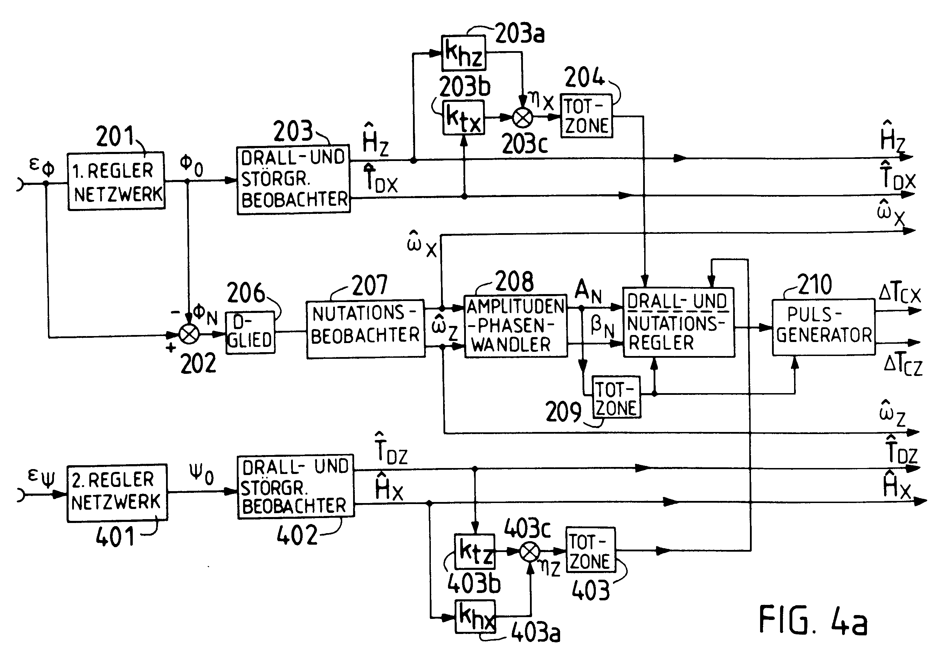

Figur 4a zeigt ein vereinfachtes Blockschaltbild einer Vorrichtung zur Nutationsdämpfung und Drallregelung bei Verfügbarkeit von Lageinformation um beide Querachsen eines Satelliten mit Drallspeicher unter Bezug auf Fig. 2b ist in diesem Fall in die Entscheidung über Eingriffe zur reinen Nutationsdämpfung im Entscheidungselement (204) für die Drallablage auch die Bedingung ($\eta_Z$ $> d_\psi$) zu überprüfen. In an sich bekannter Weise werden aus einem Ablagesignal ($\epsilon_\psi$) um die zweite Querachse (Z-Achse) - z.B. mit Hilfe von Sonnensensoren in geeigneter Anordnung oder Sternsensoren - über zweite Reglernetzwerke (401) ein Signal für die Bahnbewegungskomponente des Drallvektors ($\psi_0$) in Richtung der ersten Fahrzeugachse (X-Achse) und daraus über Drall- und Störgrößenbeobachter (402) optimale Schätzwerte für die genannte Drallkomponente ($\hat{H}_X$) und um diese Fahrzeugachse wirkende Störmomente ($\hat{T}_{DZ}$) gebildet, deren Linearkombination ($\eta_z$) zur Auslösung von Stellimpulsen zur Korrektur der Drallachsenrichtung führt sobald bestimmte, durch eine weitere Totzone (403) vorgegebene, zulässige Schwellwerte ($\pm\, d_\psi$) überschritten werden Gemäß einer erfindungsgemäßen Erweiterung der bekannten Vorrichtung werden die dabei gewonnenen Schätzwerte für Drallkomponente ($\hat{H}_X$) und Störmomente ($\hat{T}_{DZ}$) zur weiteren Verwendung in einem kontinuierlichen, z.B. nach den Gesetzmäßigkeiten einer Zustandsrückführung ausgebildeten Regler zur Vermeidung von Transitionsstörungen weiter verwendet, wie in Fig. 4a durch die weitergeführten Signalleitungen angedeutet.

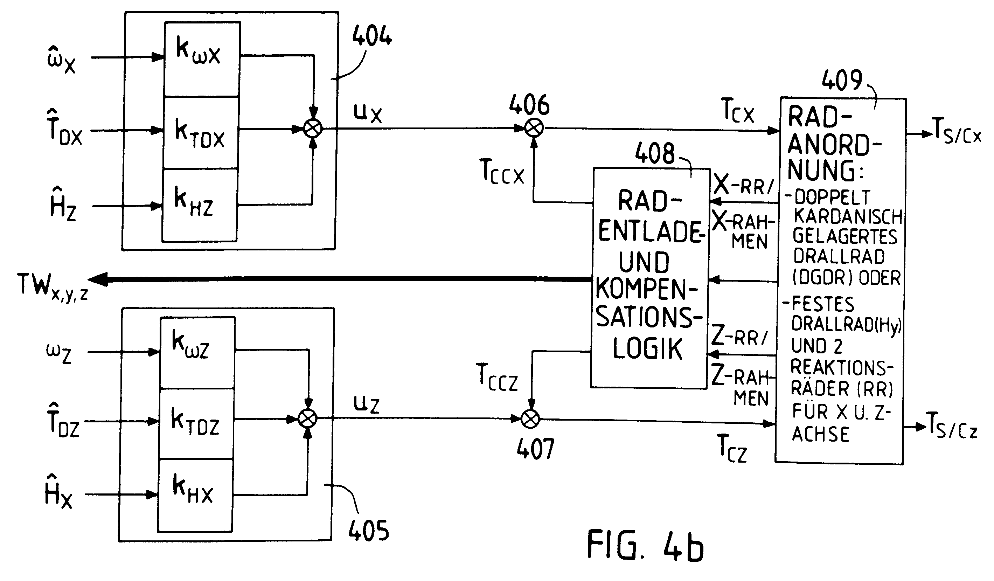

In Figur 4b, die als rechtsseitige Fortsetzung der Figur 4a anzusehen ist, wird ein Ausführungsbeispiel einer solchen Normalbetriebsregelung mit anderen Stellgliedern, in diesem Fall einem doppelt kardanisch gelagerten Drallrad oder einem festen Drallrad und zwei Reaktionsrädern für die Querachsen, gezeigt. Die im Zusammenhang mit Fig. 2b diskutierte alternative pulsförmige Ansteuerung der Antriebsmotoren für die Kardanrahmen oder Reaktionsräder zur Erzeugung von Stellmomenten um die Querachsen z.B. in der Übergangsphase, zur Nutationsdämpfung und/oder auch Drallregelung wurde in Figur 4b der Einfachheit halber weggelassen, soll jedoch damit nicht ausgeschlossen werden. Für den kontinuierlichen Teil einer solchen Regelung zeigt die Figur 4b in schematischer Weise die Bildung von Ansteuersignalen für die Erzeugung von Momenten um die Fahrzeug X-Achse ($u_x$) aus den dafür relevanten Schatzwerten ($H_Z$, $T_{DX}$, $w_x$) über entsprechenden Verstärkungsfaktoren ($k_{HZ}$, $k_{TDx}$, $k_{wx}$), der "Zustandsgrößen" für diese Fahrzeugachse und in analoger Weise die Bildung eines Signals ($u_z$) für die Ansteuerung des zweiten Kardanrahmens und/oder Reaktionsrades aus den für diese Achse relevanten Schätzwerten der Zustandsgrößen ($H_x$, $T_{Dz}$, $w_z$) über zugehörige Verstärkungsfaktoren ($k_{Hz}$, $k_{TDz}$, $k_{wz}$). Die durch Rahmenverstellungen bzw. Beschleunigung und Verzögerung der Reaktionsräder erzeugten Querachsen-Reaktionsmomente ($T_{S/Cx}$, $T_{S/Cz}$) wirken auf den Satelliten. Zur Entladung von akkumulierten Störmomenten, die sich in bleibenden Auslenkungen der Kardanrahmen oder entsprechender mittlerer Drehzahl der Reaktionsräder niederschlagen, werden bei Erreichen vorgegebener Grenzwerte in ebenfalls bekannter Weise äußere Momente um die entsprechenden Fahrzeugachsen erzeugende Stellglieder, wie Reaktionsdüsen oder auch magnetische Momentengeber eingeschaltet.

Zur Kompensation von Lagefehlern infolge der pulsförmigen Entlademomente können über eine Drallrad-Entlade- und Kompensationslogik (408) und entsprechenden Rückführungen der Entladesignale ($T_{CCX}$, $T_{CCZ}$) über Summierstellen (405, 407) die Kardanrahmen bzw. Reaktionsräder um äquivalente Beträge zur Erhaltung der Drallbilanz zurückgesetzt werden.

Als Teilaufgabe der vorliegenden Erfindung wurde bereits die Vermeidung von Transitionsfehlern in den Übergangsphasen genannt. Bei Verwendung von Drallspeichereinrichtungen zur Fahrzeugregelung um die Querachsen wie im vorliegenden Ausführungsbeispiel, lassen sich nun gemäß einer besonders vorteilhaften Ausgestaltung der Erfindung Lagefehler bei der Radentladung ohne zusätzlichen gerätetechnischen Mehraufwand bei Anwendung an sich bekannter "Solar-Sailing"-Strategien, d.h. mittels Erzeugung von Entlademomenten über Verstellungen der Solargeneratororientierung bezüglich der Sonneneinfallsebene praktisch völlig vermeiden. Bekanntlich müssen bei richtiger Dimensionierung der als Drallspeicher fungierenden Reaktionsräder oder Kardanrahmen lediglich die raumfest konstanten Anteile der Störmomente entladen werden, während (in inertialen Achsen, d.h. raumfest) periodische Anteile lediglich periodische Schwankungen des gespeicherten Dralls um den Mittelwert 0 verursachen. Besonders hohe Werte der Solardruckmomente, sogenannte "Windmühlenmomente" können insbesondere durch gegensinnige Verstellung der nord- und südseitig angebrachten Solargeneratorflügel erzeugt werden, die allerdings immmer um die (praktisch ebenfalls raumfeste) Sonneneinfallsrichtung wirken. Da sich raumfeste Momentenkomponenten infolge der täglichen Drehung erdorientierter Fahrzeuge als periodisch schwankend in Satellitenachsen darstellen kann die Entladung unter ausschließlicher Anwendung dieser Windmühlenmomente und somit höchst wirksam auch dann erfolgen, wenn der (raumfeste) Störmomentenvektor nicht in der Sonneneinfallebene liegt sondern senkrecht dazu. Es muß dann lediglich die Entladung um eine Viertelumlaufperiode zeitlich versetzt erfolgen. Dann befindet sich nämlich der mit den Satellitenachsen gerätetechnisch gekoppelte, akkumulierte Drall gerade um genau die besagten 90° räumlich gedreht in der Sonneneinfallsebene und kann in der Umgebung dieser Orientierung entladen werden, wobei das Entlademoment auch noch kontinuierlich proportional zum Drehwinkel der Solargeneratorverstellung variiert, d.h. an die jeweiligen Bedürfnisse angepaßt werden kann.

| $\Phi.$ $(\sim-\frac{H_Z}{\lvert H_Y\rvert})$ | $\Delta P=\frac{T_{CX}\Delta t}{\lvert H_Y\rvert}$ | $\gamma_0$ [rad] | $\pm\Delta\gamma$ [rad] falls: | | $\beta_N$ [rad] |
|---|---|---|---|---|---|
| | | | $\frac{1}{2}\le\frac{A_N}{\Delta P_X}\le\frac{3}{2}$ | $\frac{1}{2}>\frac{A_N}{\Delta P_X}>\frac{3}{2}$ | |
| $<-d_\Phi$ | $+$ | $\pi-\alpha$ | arc cos $(\frac{1}{2}\frac{A_N}{\Delta P}+\frac{3}{8}\frac{\Delta P}{A_N})$ Näherung: $\sqrt{1-(\frac{1}{2}\frac{A_N}{\Delta P}+\frac{3}{8}\frac{\Delta P}{A_N})^2}$ | $0$ | $\gamma_0-\lvert\Delta\gamma\rvert\pm\Delta\beta$ oder $\gamma_0+\lvert\Delta\gamma\rvert\pm\Delta\beta$ |
| $>+d_\Phi$ | $-$ | $2\pi-\alpha$ bzw $-\alpha$ | | $0$ | $\gamma_0-\lvert\Delta\gamma\rvert\pm\Delta\beta$ oder $\gamma_0+\lvert\Delta\gamma\rvert\pm\Delta\beta$ |

Tab. 1a: Eingriffsbedingungen ($\beta_N$) zur Drall- und Nutationsregelung mit einem Impuls pro Nutationsperiode

| $A_N$ | $\Phi_0$ $(\sim-\frac{H_Z}{\lvert H_Y\rvert})$ | $\Delta P=\frac{T_{CX}\Delta t}{\lvert H_Y\rvert}$ | $\gamma_0$ [rad] | $\pm\Delta\gamma$ [rad] falls: | | $\beta_N$ [rad] |
|---|---|---|---|---|---|---|
| | | | | $d_N\le\frac{A_N}{\Delta P}\le\frac{3}{2}$ | $d_N>\frac{A_N}{\Delta P}>\frac{3}{2}$ | |
| $>d_N$ | $-d_\Phi<\Phi_0\le 0$ | $+$ | $\pi-\alpha$ | arc cos $(\frac{1}{2}\frac{A_N}{\Delta P}+\frac{3}{8}\frac{\Delta P}{A_N})$ Näherung: $\sqrt{1-(\frac{1}{2}\frac{A_N}{\Delta P}+\frac{3}{8}\frac{\Delta P}{A_N})^2}$ | $0$ $0$ | $\gamma_0-\lvert\Delta\gamma\rvert\pm\Delta\beta$ oder: $\gamma_0+\lvert\Delta\gamma\rvert\pm\Delta\beta$ |
| $<d_N$ | $0\le\Phi_0<+d_\Phi$ | $-$ | $2\pi-\alpha$ bzw. $-\alpha$ | | $0$ $0$ | $\gamma_0-\lvert\Delta\gamma\rvert\pm\Delta\beta$ oder: $\gamma_0+\lvert\Delta\gamma\rvert\pm\Delta\beta$ |

Tab. 2a: Eingriffsbedingungen zur Nutationsdämpfung bei 1 Im-
puls/Nutationsperiode

| $\Phi_0$ $(\sim -\frac{HZ}{\vert H_Y \vert})$ | $\frac{T_C \Delta t}{\vert H_Y \vert}$ | | $\gamma_0$ [rad] | $\pm \Delta\gamma_1$ [rad] falls: | | $\beta_{N1}$ [rad] | $\Delta\beta_{N2}$ | $\beta_{N2}$ [rad] falls: | |
|---|---|---|---|---|---|---|---|---|---|
| | $\Delta P_1$ | $\Delta P_2$ | | $\frac{A_N}{2\Delta P} \leq 1$ | $\frac{A_N}{2\Delta P} > 1$ | | | $\Delta\beta_{N2} \leq \frac{\pi}{k}$ | $\Delta\beta_{N2} > \frac{\pi}{k}$ |
| $< -d_\Phi$ | $+$ | $+$ | $\pi - \alpha$ | $\arccos \frac{A_N}{2\Delta P}$ | $0$ | $\gamma_{01} - \vert\Delta\gamma_1\vert \pm \Delta\beta$ oder $\gamma_{01} + \vert\Delta\gamma_1\vert \pm \Delta\beta$ | $\pi - 2\vert\Delta\gamma_1\vert$ | $\Delta\beta_{N2}$ $\Delta\beta_{N2}$ | $\gamma_0 \pm \Delta\beta$ $\gamma_0 \pm \Delta\beta$ |
| $> +d_\Phi$ | $-$ | $-$ | $(2\pi) - \alpha$ | $\arccos \frac{A_N}{2\Delta P}$ | $0$ | $\gamma_0 - \vert\Delta\gamma_1\vert \pm \Delta\beta$ oder $\gamma_0 + \vert\Delta\gamma_1\vert \pm \Delta\beta$ | $\pi - 2\vert\Delta\gamma_1\vert$ | $\Delta\beta_{N2}$ $\Delta\beta_{N2}$ | $\gamma_0 \pm \Delta\beta$ $\gamma_0 \pm \Delta\beta$ |
| | | | | | | | | Prädiktions-wert | Beobachter-wert |

Tab. 1b: Eingriffsbedingungen $(\beta_{N1}, \beta_{N2})$ bei 2 Impulsen $(\Delta P_1, \Delta P_2)$ pro Nutationsperiode (Drallkorrektur + Nutationsdämpfung

| $A_N$ | $\Phi_0 \sim$ $(-\dfrac{HZ}{\|H_Y\|})$ | $\dfrac{T_C \times \Delta t}{\|H_Y\|}$ | | $\pm \Delta\gamma_1$ : falls | | $\beta_{N1}$ [rad] | $\Delta\beta_{N2}$ [rad] | $\beta_{N2}$: falls | |
| | | $\Delta P_1$ | $\Delta P_2$ | $\dfrac{A_N}{2\Delta P} \leq 1$ | $\dfrac{A_N}{2\Delta P} > 1$ | | | $\Delta\beta_{N2} \leq \dfrac{\pi}{k}$ | $\Delta\beta_{N2} > \dfrac{\pi}{k}$ |
|---|---|---|---|---|---|---|---|---|---|
| $> d_N$ | $0$ $\leq \Phi_0 <$ $+ d_\Phi$ | $-$ $+$ | $+$ $-$ | $\arccos \dfrac{A_N}{2\Delta P}$ | $0$ | $\gamma_{02} + \|\Delta\gamma_1\| \pm \Delta\beta$ oder $\gamma_{01} + \|\Delta\gamma_1\| \pm \Delta\beta$ | $\pi - 2\|\Delta\gamma_1\|$ $\pi - 2\|\Delta\gamma_1\|$ | $\Delta\beta_{N2}$ $\Delta\beta_{N2}$ | $\gamma_{01} \pm \Delta\beta$ $\gamma_{02} \pm \Delta\beta$ |
| $> d_N$ | $- d_\Phi$ $< \Phi_0 \leq$ $0$ | $+$ $-$ | $-$ $+$ | $\arccos \dfrac{A_N}{2\Delta P}$ | $0$ | $\gamma_{01} + \|\Delta\gamma_1\| \pm \Delta\beta$ oder $\gamma_{02} + \|\Delta\gamma_1\| \pm \Delta\beta$ | $\pi - 2\|\Delta\gamma_1\|$ $\pi - 2\|\Delta\gamma_1\|$ | $\Delta\beta_{N2}$ $\Delta\beta_{N2}$ | $\gamma_{02} \pm \Delta\beta$ $\gamma_{01} \pm \Delta\beta$ |
| | | | | | | | | Prädiktions- wert | Beobachter- wert |

$$\gamma_{01} = \pi - \alpha$$
$$\gamma_{02} = (2\pi) - \alpha = \gamma_{01} + \pi$$

Tab. 2b: Eingriffsbedingungen ($\beta_{N1}$, $\beta_{N2}$) zur Nutationsdämpfung mit 2 Impulsen (um X-Achse) pro Nutationsperiode

EP 0 602 132 B1

EP 0 602 132 B1

| $A_N$ | $\Psi_0 \sim \dfrac{H_X}{|H_Y|}$ | $\dfrac{T_{CZ}\Delta t}{|H_Y|}$ | | $\pm\Delta\gamma_1$ : falls | | $\beta_{N3}$ [rad] | $\Delta\beta_{N3}$ | $\beta_{N4}$ : falls | |
|---|---|---|---|---|---|---|---|---|---|
| | | $\Delta P_3$ | $\Delta P_4$ | $\dfrac{A_N}{2\Delta P} \leq 1$ | $\dfrac{A_N}{2\Delta P} > 1$ | | | $\Delta\beta_{N3} \leq \dfrac{\pi}{k}$ | $\Delta\beta_{N3} > \dfrac{\pi}{k}$ |
| $>d_N$ | $<d_\phi$ | − | + | arc cos $\dfrac{A_N}{2\Delta P}$ | 0 | $\gamma_{03}+|\Delta\gamma_1|\pm\Delta\beta$ | $\pi-2|\Delta\gamma_1|$ | $\Delta\beta_{N3}$ | $\gamma_{04}\pm\Delta\beta$ |
| | | | | | | oder | | | |
| | | + | − | | | $\gamma_{04}+|\Delta\gamma_1|\pm\Delta\beta$ | $\pi-2|\Delta\gamma_1|$ | $\Delta\beta_{N3}$ | $\gamma_{03}\pm\Delta\beta$ |
| | | | | | | | | Prädiktions-wert | Beobachter-wert |

$$\gamma_{03} = \pi/2 = \gamma_{02} + \pi/2$$

$$\gamma_{04} = 3\pi/2 = \gamma_{03} + \pi = \gamma_{01} + \pi/2$$

Tab. 2c: Eingriffsbedingungen ($\beta_{N3}$, $\beta_{N4}$) zur Nutationsdämpfung mit 2 Impulsen (um Z-Achse) pro Nutationsperiode

ANLAGE

Eingriffsbedingungen für optimale Drall- und Nutationsregelung (gemäß der WO 89/02622).

Die Nutationsamplitude ($A_N$) wird ermittelt aus der geschätzten Winkelgeschwindigkeit ($\omega_x$, $\omega_z$), der Nutationsfrequenz ($\omega_N$) und den Querachsen-Trägheitsmomenten ($I_x$, $I_z$) nach der Formel

$$A_N = \sqrt{\frac{\omega_x^2}{\omega_N^2} + \frac{\omega_z^2}{\omega_N^2} \cdot \frac{I_z}{I_x}} \quad [rad] \qquad (B-1)$$

Die Beziehung für den Phasenwinkel lautet:

$$\beta_N = arctg \frac{\sqrt{I_z/I_x} \cdot \omega_z}{\omega_x} \quad [grd] \qquad (B-2)$$

und bedeutet, daß die Nutationsphase durch Null geht, wenn die Nutationsbewegung um die zweite Querachse (Z-Achse) durch Null geht und gleichzeitig um die dazu orthogonale erste Querachse (X-Achse) ihr Maximum (+ $A_N$) erreicht. Die nach den angegebenen Vorschriften gebildeten Signale ($\Delta t_{cx}$, $A_N$, $\beta_N$) werden am Ausgang eines Modulators bzw. eines Amplituden-/Phasenwandlers derart miteinander verknüpft, daß der Modulator über Notwendigkeit, Vorzeichen und Dauer eines Stelleingriffs entscheidet und die Ausgangssignale des Amplituden-/Phasenwandlers über den Zeitpunkt des Stelleingriffs ($\Delta T_{cx}$) innerhalb einer Nutationsperiode. Dabei sind zwei Fälle zu unterscheiden, je nachdem ob die Pulswiederholungsfrequenz des Modulators einen oder zwei Stelleingriffe pro Nutationsperiode vorschreibt.

Im erstgenannten Fall soll ein Stelleingriff wie vom Modulator nach Dauer und Vorzeichen vorgeschrieben in folgendem Bereich des Nutationswinkels ($\beta_N$, $0 \leq \beta_N \leq 360°$) vorgenommen werden:

$$\gamma_0 + \Delta\gamma - \Delta\beta \leq \beta_N(t) \leq \gamma_0 + \Delta\gamma + \Delta\beta \qquad (B-3)$$

sofern:

$$\frac{1}{2} \leq \frac{A_N}{\Delta P_x} \leq \frac{3}{2} \qquad (B-4)$$

d.h. wenn der Momentanwert (Gleichung B-1) der laufend ermittelten Nutationsamplitude ($A_N$) mehr als die Hälfte, aber weniger als der anderthalbfache des Nutationshalbkegels beträgt, den ein Minimalimpuls ($\Delta P_x$) erzeugt, wobei:

$$\Delta P_x \cong \frac{\Delta T_{cx}}{|H_y|} = \frac{T_{cx} \cdot \Delta t_{cx}}{|H_y|} \qquad (B-5)$$

$$\Delta\gamma(t) \cong \pm arc\, cos\left( \frac{1}{2} \cdot \frac{A_N}{\Delta P_x} + \frac{3}{8} \cdot \frac{\Delta P_x}{A_N} \right) \qquad (B-6)$$

oder näherungsweise:

$$\Delta\gamma(t) \cong \pm\sqrt{1 - \left(\frac{1}{2}\cdot\frac{A_N}{\Delta P_x} + \frac{3}{8}\cdot\frac{\Delta P_x}{A_N}\right)^2} \qquad (B\text{-}7)$$

und festen Werten ($\gamma_0$, $\Delta\beta$), vorzugsweise

$\Delta\beta \doteq 0.1$ rad
$\gamma_0 = \pi - \alpha$ für positive Stelleingriffe
$\gamma_0 = 2\pi - \alpha$ für negative Stelleingriffe      (B-8)

Ist dagegen die Nutationsamplitude ($A_N$, Gleichung B-1) großer oder kleiner als die angegebenen Schranken, dann soll der Stelleingriff in folgendem Bereich des Nutationswinkels ($\beta_N(t)$: $0 \leq \beta_N \leq 2\pi$) erfolgen:

$\gamma_0 - \Delta\beta \leq \beta_N(t) \leq \gamma_0 + \Delta\beta$      (B-8)

Es bedeuten:
$\gamma = \gamma_0 + \Delta\gamma$ - den optimalen Phasenwinkel für den Stelleingriff innerhalb einer Nutationsschwingung
$T_{cx}$ - das Momenteniveau des Stelleingriffs
$\Delta t_{cx}$ - die vom Modulator kommandierte Dauer des Stelleingriffs
$\alpha$ - den Schrägeinbauwinkel des Stellgliedes
Die anderen Größen ($\Delta P_x$, $\gamma_0$, $\Delta\gamma$) sind durch die sie beschreibenden Gleichungen (B-5, B-7, B-8) definiert.
Im Falle zweier Stelleingriffe pro Nutationsperiode ist der erste Stelleingriff vorzunehmen wenn:

$\gamma_0 - \Delta\gamma_1 - \Delta\beta \leq \beta_{N1}(t) \leq \gamma_0 - \Delta\gamma_1 + \Delta\beta$      (B-3)

sofern:

$A_N \leqq 2\,\Delta P_x$      (B-9)

wobei allerdings:

$$\Delta\gamma_1 = \mp\text{ arc cos}\left(\frac{A_N}{2\Delta P_x}\right) \qquad (B\text{-}10)$$

und der 2. Stelleingriff wenn

$\gamma_0 - \Delta\beta \leq \beta_{N2}(t) \leq \gamma_0 + \Delta\beta$      (B-11)

Dazu ist allerdings unbedingt erforderlich, daß die Bestimmung der Nutationsamplitude ($A_N$) und -phase ($\beta_N$) in kürzerer Zeit erfolgt als der halben Nutationsperiode ($T_N$) entspricht. Wenn z.B. infolge hoher Nutationsfrequenz und/oder langsamer Datenverarbeitung in der Bordelektronik dies nicht gewährleistet werden kann, dann ist die Bedingung für den 2. Impuls nach Gleichung B-11 zu ersetzen durch Gleichung (B-12):

$\Delta\beta_{N2}(t) = 2\Delta\gamma_1 + 2n\pi$      (B-12)

mit n = 0,1,2 ...
u. $\beta_{N2} > 0$
ist dagegen

$A_N > 2\Delta P_x$      (B-13)

dann ist zu setzen

$\Delta\gamma_1 = 0 \quad$ (B-14)

und die beiden Bedingungen (B-3) und (B-11) gehen ineinander über.

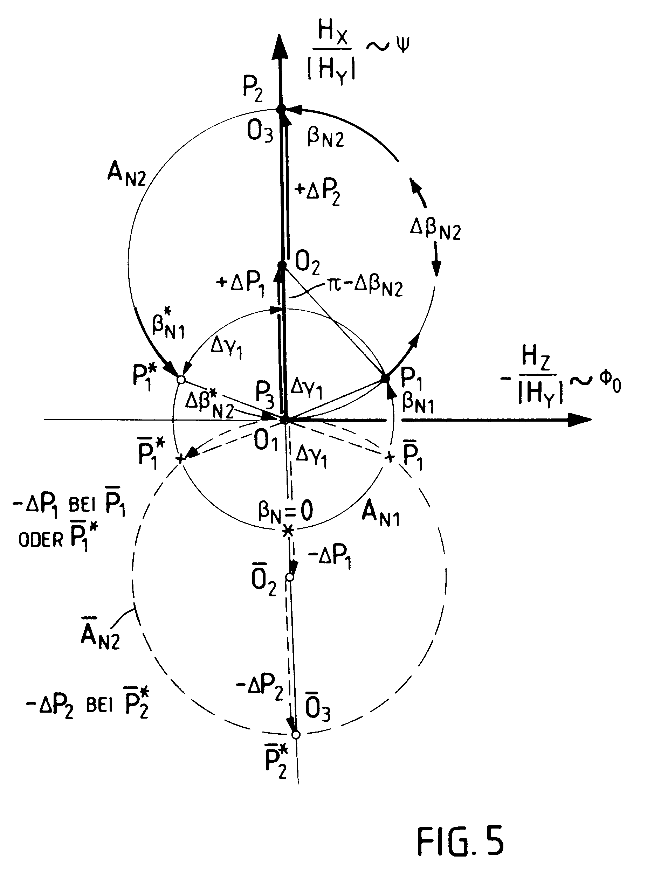

Fig. 5 zeigt die Phasenbedingungen zur Drall- und Nutationsregelung bei zwei Stelleingriffen pro Nutationsperiode um die X-Achse (X = 0): $+\Delta P_1$ bei $P_1$ ($\beta_{N1}$) oder $P_1^*$ ($\beta_{N1}^*$), $+\Delta P_2$ bei $P_2$ ($\beta_{N2}$; $\Delta\beta_{N2}$) bzw. $-\Delta P_1$ bei $\overline{P}_1$ oder $\overline{P}_1^*$, $-\Delta P_2$ bei $\overline{P}_2^*$.

**Patentansprüche**

1. Verfahren zur Lageregelung eines dreiachsenstabilisierten drallbehafteten Raumfahrzeuges in Bezug auf die Einhaltung der Drallrichtung im inertialen Raum und die Begrenzung der Nutationsamplitude unter Verwendung mindestens eines Totzonegliedes, **dadurch gekennzeichnet**, daß sowohl die Abweichung der Drallrichtung von der Sollorientierung als auch die Nutationsamplitude ($A_N$) mit Hilfe getrennter Totzoneglieder (204, 209) laufend bezüglich Überschreitens vorgegebener Schwellwerte ($\pm$ $d_\phi$, $d_N$) überprüft und Stelleingriffe allein zum Zwecke des Nutationsabbaus auch dann ausgelöst werden, wenn sich die Drallrichtung innerhalb des durch die vorgegebenen Schwellwerte ($\pm$ $d_\phi$) begrenzten Bereiches befindet.

2. Verfahren zur Lageregelung eines bezüglich einer vorgebbaren Sollage dreiachsenstabilisierten, drallbehafteten Raumfahrzeuges, das mit Stellgliedern zur Erzeugung von Stellmomenten um zwei zur Drallachse sowie zueinander orthogonale Querachsen ausgestattet ist, bei dem mit Hilfe mindestens eines Lagesensors ein die Winkelablage um eine der beiden Querachsen bezüglich der Sollage repräsentierendes Winkelablagesignal gewonnen, aus diesem ein erster, für die Bahnbewegung des Raumfahrzeuges repräsentativer Signalanteil ($\phi_0$) und ein zweiter, für die Nutationsbewegung des Raumfahrzeuges repräsentativer Signalanteil ($\phi_N$) gebildet, unter Verwendung des ersten Signalanteils ein Eingangssignal für ein erstes Totzoneglied und unter Verwendung des zweiten Signalanteils die Nutationsamplitude ($A_N$) und die Nutationsphase ($\beta_N$) repräsentierende Signale gewonnen werden, welche ebenso wie das Ausgangssignal des ersten Totzonegliedes einem die Zeitpunkte für die Auslösung von Stelleingriffen durch die Stellglieder bestimmenden Nutationsregler zugeführt werden, **dadurch gekennzeichnet**, daß das die Nu-tationsamplitude ($A_N$) repräsentierende Signal auch einem zweiten Totzoneglied (209) zugeführt wird, dessen Schwellwert ($d_N$) gemäß einem vorgebbaren, höchstzulässigen Wert für die Nutationsamplitude ($A_N$) gewählt und dessen Ausgangssignal ebenfalls vom Nutationsregler (205) aufgenommen sowie dort bei der Entscheidung über die Notwendigkeit eines zusätzlichen Stelleingriffes berücksichtigt wird.

3. Vorrichtung zur Lageregelung eines bezüglich einer vorgebbaren Sollage dreiachsenstabilisierten, drallbehafteten Raumfahrzeuges, das mit mindestens einem Lagesensor zur Messung der Winkelablage um mindestens eine der beiden zur Drallachse sowie zueinander orthogonalen Querachsen bezüglich der Sollage, Stellgliedern zur Erzeugung von Stellmomenten um die beiden Querachsen, einem das die Winkelablage darstellende Winkelablagesignal ($\epsilon_\phi$) aufnehmenden und daraus einen die Bahnbewegung des Raumfahrzeuges repräsentierenden, ersten Signalanteil ($\phi_0$) erzeugenden Reglernetzwerk, einer der Gewinnung eines die Nutationsbewegung des Raumfahrzeuges repräsentierenden, zweiten Signal anteils ($\phi_N$) aus dem Winkelablagesignal ($\epsilon_\phi$) dienenden, ersten Einrichtung, einem den ersten Signalanteil ($\phi_0$) aufnehmenden Drallregler mit nachgeschaltetem ersten Totzoneglied, einer der Gewinnung von die Nutationsamplitude ($A_N$) und die Nutationsphase ($\beta_N$) repräsentierenden Signalen aus dem zweiten Signalanteil ($\phi_N$) dienenden, zweiten Einrichtung sowie einem letzterer sowie dem ersten Totzoneglied nachgeschalteten Nutationsregler zur Bestimmung der Zeitpunkte für die Auslösung der Stellmomente, **dadurch gekennzeichnet**, daß ein zweites, das die Nutationsamplitude ($A_N$) repräsentierende Signal aufnehmendes, ein Ausgangssignal an den Nutationsregler (205) abgebendes Totzoneglied (209) vorhanden ist.

**Claims**

1. Process for attitude control of a three-axes-stabilized spinning space vehicle relative to maintaining the spin direction in the inertial space and defining the nutation amplitude by using at least one dead-zone element, **characterized in that** both the deviation of the spin direction from a nominal orientation and the nutation amplitude ($A_N$) are continuously monitored as regards exceeding specified threshold values

(± $d_\phi$, $d_N$ ) by means of separate dead-zone elements (204, 209), and that control operations solely for the purpose of reducing nutation are triggered even if the spin direction is within the range defined by the specified threshold values (± $d_\phi$).

2. Process for attitude control of a space vehicle, which is three-axes-stabilized relative to a specifiable nominal position and spinning and which is equipped with control elements for generating control moments around two transverse axes which are orthogonal relative to both the spin axis and to each other, and that with the aid of at least one attitude sensor is obtained an angular placement signal which represents the angular placement around one of the two transverse axes relative to the nominal position, and therefrom is formed a first signal portion ($\phi_0$) which is representative of the trajectory movement of the space vehicle, and a second signal portion ($\phi_N$) which is representative of the nutation movement of the space vehicle, whilst by using the first signal portion is obtained an input signal for a first dead-zone element, and by using the second signal portion are obtained signals representing the nutation amplitude ($A_N$) and the nutation phase ($\beta_N$), which are, like the output signal of the first dead-zone element, fed to a nutation controller which determines the moments in time for triggering control operations by the control elements, **characterized in that** the signal which represents the nutation amplitude ($A_N$) is also fed to a second dead-zone element (209) the threshold ($d_N$) of which is chosen according to a specified maximum admissible value for the nutation amplitude ($A_N$) and the output signal of which is also received by the nutation controller (205) and taken into consideration thereat in a decision about the need of an additional control engagement.

3. Device for attitude control of a spinning space vehicle, which is three-axes-stabilized relative to a specified nominal position, comprising at least one attitude sensor for measuring the angular placement around at least one of the two transverse axes which are orthogonal to the spin axis and to each other relative to the nominal position, control elements for generating control moments around both transverse axes, a regulating network, which receives the angle placement signal ($\epsilon_\phi$) representing the angular placement and produces therefrom a first signal portion ($\phi_0$) which represents the trajectory movement of the space vehicle, a first device, which serves to obtain from the angular placement signal ($\epsilon_\phi$) a second signal portion ($\phi_N$) which represents the nutation movement of the space vehicle, a spin controller to receive the first signal portion ($\phi_0$), having a dead-zone element downstream, a second device, which serves to obtain from the second signal portion ($\phi_N$) signals representing the nutation amplitude ($A_N$) and the nutation phase ($\beta_N$), as well as a nutation controller on the output of both the latter and the first dead-zone element for determining the moments in time for triggering control moments, **characterized in that** there is a second dead-zone element (209), which receives the signal which represents the nutation amplitude ($A_N$) and sends an output signal to the nutation controller (205).

## Revendications

1. Procédé pour la régulation de l'attitude d'un astronef animé d'un mouvement de rotation, stabilisé suivant trois axes en vue du maintien de la direction de rotation dans l'espace inertiel et de la limitation de l'amplitude de nutation, utilisant au moins un circuit à zone heurte, caractérisé par le fait que l'on contrôle en continu à la fois l'écart de la direction de rotation par rapport à l'orientation de consigne et l'amplitude de nutation ($A_N$) au moyen de circuits à zone neutre (204, 209) distincts aux fins de détecter le dépassement de valeurs seuils prédéterminées (± $d_\phi$, $d_N$) et que l'on déclenche des actions de réglage uniquement pour supprimer la nutation lorsque la direction de rotation se situe dans la zone délimitée par les valeurs seuil (±$d_\phi$) prédéterminées.

2. Procédé pour la régulation de l'attitude d'un astronef animé d'un mouvement de rotation, stabilisé suivant trois axes par rapport à une attitude de consigne prédéterminée, comportant des actionneurs pour générer des moments de réglage autour de deux axes transversaux orthogonaux à l'axe de rotation et orthogonaux entre eux, procédé selon lequel, au moyen d'an moins un détecteur d'attitude, on produit un signal d'écart angulaire qui représente l'écart angulaire autour de l'un des deux axes transversaux par rapport à l'attitude de consigne, on forme à partir de ce signal une première partie de signal ($\phi_0$) représentant le déplacement de l'orbite de l'astronef et une deuxième partie de signal ($\phi_N$) représentaant le mouvement de nutation dudit astronef, en utilisant la première partie de signal, on produit un signal d'entrée pour un premier circuit à zone neutre et, en utilisant la deuxième partie de signal on produit des signaux représentant l'amplitude de nutation ($A_N$) et la phase de nutation ($\beta_N$) que l'on envoie, en même temps que le signal de sortie du premier circuit à zone neutre, à un dispositif de réglage de la nutation qui détermine les instants pour des actions de réglage des actionneurs, caractérisé par le fait que l'on envoie le signal représentant l'amplitude de nutation ($A_N$) également à un deuxième circuit (209) à zone neutre, dont le seuil ($d_N$) est choisi en fonction d'une valeur maximale admissible prédéterminée pour l'amplitude de nutation ($A_N$) et dont le signal de sortie est également envoyé au dispositif de réglage de la nutation (205) et est pris en compte dans la décision sur la nécessité de déclencher une action de réglage supplémentaire.

3. Dispositif pour la régulation de l'attitude d'un astronef animé d'un mouvement de rotation, stabilisé suivant trois axes par rapport à une attitude de consigne prédéterminée, comportant au moins un détecteur d'attitude pour mesurer l'écart angulaire autour d'au moins l'un des deux axes transversaux orthogonaux à l'axe de rotation et orthogonaux entre eux par rapport à l'attitude de consigne, des actionneurs pour générer des moments de réglage autour des des axes transversaux, un circuit de réglage qui reçoit le signal d'écart angulaire ($\epsilon_\phi$) représentant l'écart angulaire et produit à partir de celui-ci une première partie de signal ($\phi_0$) qui représente le déplacement de l'orbite de l'astronef, un premier dispositif qui permet d'obtenir à partir du signal d'écart angulaire ($\epsilon_\phi$) une deuxième partie de signal ($\phi_N$) représentant le mouvement de nutation, un dispositif de réglage de la rotation suivi d'un premier circuit à zone neutre qui reçoit la première partie de signal ($\phi_0$), un deuxième dispositif qui permet d'obtenir à partir de la deuxième partie de signal ($\phi_N$) des signaux représentant l'amplitude de nutation ($A_N$) et la phase de nutation ($\beta_N$) ainsi qu'un dispositif de réglage de la nutation qui est placé à la suite dudit deuxième dispositif et du premier circuit à zone neutre aux fins de déterminer les instants de déclenchement des moments de réglage, caractérisé par le fait qu'il est prévu un deuxième circuit à zone neutre (209) qui reçoit le signal représentant l'amplitude de nutation ($A_N$) et délivre un signal de sortie en direction du dispositif de réglage de la nutation (205).

FIG. 1

FIG. 2a

EP 0 602 132 B1

FIG. 2b

FIG. 2c

EP 0 602 132 B1

FIG. 3a

$$A_{Nmin} = \frac{1}{2}\Delta P_X$$

$$d_{Nmin} > A_{Nmin}$$

$$\Delta P_X = \frac{T_{CX} \cdot \Delta t}{|H_Y|}$$

FIG. 3b

FIG. 3c

FIG. 4a

EP 0 602 132 B1

FIG. 4b

FIG. 5